# EUROPÄISCHE PATENTANMELDUNG

(11) **EP 4 693 889 A1**
(43) Veröffentlichungstag der Anmeldung: **11.02.2026**
(21) Anmeldenummer: 24193453.8
(22) Anmeldetag: 07.08.2024
(51) Int. Cl.: H02S 20/10

(54) **HALTEVORRICHTUNG UND MODULBEFESTIGUNGSVORRICHTUNG FÜR EIN PHOTOVOLTAIKMODUL SOWIE STANGENBEFESTIGUNGSVORRICHTUNG**

(71) Anmelder: Mabewo Energy AG, 6403 Küssnacht am Rigi (CH)
(72) Erfinder: GRAESS, Harald, 6403 Küssnacht am Rigi (CH)

(57) **Zusammenfassung**

Die Erfindung betrifft Freiland-Photovoltaikanlagen. Um Freiland-Photovoltaikanlagen einfacher und günstiger bereitstellen zu können, ist erfindungsgemäß vorgesehen, dass eine Haltevorrichtung (1) für Photovoltaikmodule (11) mindestens ein Tragseil (6) zum Tragen mindestens eines Photovoltaikmoduls (11) aufweist. Ferner ist erfindungsgemäß vorgesehen, dass eine Modulbefestigungsvorrichtung (40) zur Befestigung eines Photovoltaikmoduls (6), insbesondere am Tragseil (6) der erfindungsgemäßen Haltevorrichtung (1), zwei Durchgangsöffnung (42, 43) und ein von einer der Durchgangsöffnung (43) beanstandet angeordnetes Befestigungselement (44) aufweist. Weiters ist erfindungsgemäß vorgesehen, dass eine Stangenbefestigungsvorrichtung (20) zur Befestigung an Stangen, etwa Stangen, die eine Aufstelleinrichtung (2, 2a, 2b) der erfindungsgemäßen Haltevorrichtung (1) bilden, zweiteilig ausgebildet ist, wobei eines der Befestigungsteile (22) eine Befestigungsaufnahme (34) aufweist.

## Beschreibung

### Technisches Gebiet

Die vorliegende Erfindung betrifft eine Haltevorrichtung zum Halten mindestens eines Photovoltaikmoduls. Ferner betrifft die vorliegende Erfindung eine Modulbefestigungsvorrichtung zur Befestigung eines Photovoltaikmoduls in seiner Betriebsposition an einer Trageeinrichtung einer Haltevorrichtung. Außerdem betrifft die vorliegende Erfindung Stangenbefestigungsvorrichtung zur unverschieblichen Befestigung einer Stange, insbesondere einer Stange einer Haltevorrichtung zum Halten mindestens eines Photovoltaikmoduls.

### Technologischer Hintergrund

Photovoltaikmodule können nicht nur auf oder an Gebäuden, sondern auch auf Freiflächen zur Bereitstellung elektrischer Energie betrieben werden. Bekannte Haltevorrichtungen für Photovoltaikmodule sind oftmals teurer als die Photovoltaikmodule an sich und ermöglichen in der Regel keine weitere Nutzung der Freifläche, etwa für landwirtschaftliche Zwecke.

### Darstellung der Erfindung

Vor dem oben dargelegten Hintergrund bestand die Aufgabe der Erfindung darin, die Erstellung einer Photovoltaik-Freilandanlage mit verringerten Kosten bei gleichzeitig verbesserter eine Nutzbarkeit der jeweiligen Fläche, auf der die Anlage steht oder stehen soll, ermöglicht.

Diese Aufgabe ist durch eine Haltevorrichtung gemäß Anspruch 1 gelöst worden. Eine erfindungsgemäße Modulbefestigungsvorrichtung ist Gegentand von Anspruch 13 und eine erfindungsgemäße Stangenbefestigungsvorrichtung ist Gegenstand von Anspruch 15. Vorteilhafte Weiterbildungen sind in den jeweiligen Unteransprüchen angegeben und werden nachfolgend erläutert.

Eine erfindungsgemäße Haltevorrichtung ist mit zumindest einer Aufstelleinrichtung zum Aufstellen auf einem Untergrund ausgestattet. Die Haltevorrichtung weist ferner zumindest eine Trageeinrichtung auf, die dazu ausgebildet ist, das mindestens eine Photovoltaikmodul in seiner Betriebsposition zu tragen. Die zumindest eine Trageeinrichtung weist wenigstens ein sich in einer Seilrichtung erstreckendes Tragseil zum Tragen des mindestens einen Photovoltaikmoduls auf.

In einer Betriebsposition kann das Photovoltaikmodul beispielsweise im Wesentlichen senkrecht zur Schwerkraft und/oder parallel zum Untergrund, auf dem die Haltevorrichtung angeordnet ist, ausgerichtet sein.

Erfindungsgemäß ist ferner vorgesehen, dass das wenigstens eine Tragseil mit der Aufstelleinrichtung Kraft übertragend dazu verbunden ist, zumindest die durch das mindestens eine Photovoltaikmodul auf das Tragseil ausgeübte Gewichtskraft an die Aufstelleinrichtung abzuleiten.

Dadurch, dass das Tragseil das wenigstens eine Photovoltaikmodul trägt und dessen Gewichtskraft aufnimmt und/oder ableitet, sind können sperrige Haltegestelle oder Tragelemente mit hohem Gewicht und/oder hohem Konstruktions- und Herstellaufwand, etwa aus Stahlträgern, für diesen Zweck vermieden werden.

Tragseile sind nicht nur kostengünstiger in der Herstellung, sondern auch einfacher zu transportieren und zu montieren, wodurch zusätzlich zu den Materialkosten auch die Transport- und Montagekosten der erfindungsgemäßen Haltevorrichtung sinken. Außerdem sind Tragseile im Vergleich zu Stahlträgern vergleichsweise schmal, sodass diese die Unterseite eines auf dem Tragseil liegenden Photovoltaikmoduls weniger verschatten, etwa wenn Licht vom Untergrund reflektiert wird, sodass auch bifaziale Photovoltaikmodule effizient verwendbar sind, wenn diese durch die Haltevorrichtung gehalten werden.

Schließlich ermöglicht die erfindungsgemäße Ausgestaltung einer Haltevorrichtung mit einer Aufstelleinrichtung und wenigstens einem Tragseil mit nur geringem Aufwand eine verhältnismäßig hohe Positionierung von Photovoltaikmodulen über dem Untergrund bei einer verhältnismäßig geringen Anzahl von Hindernissen oder Barrieren unterhalb der Photovoltaikmodule. Hierdurch ergibt sich eine besonders vorteilhafte Nutzbarkeit der Flächen unterhalb von Photovoltaikmodule, die auf einer erfindungsgemäßen Haltevorrichtung befestigt sind.

Dabei kann die Lösung durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Das wenigstens eine Tragseil kann dazu ausgebildet sein, zumindest eine durch das mindestens eine Photovoltaikmodul in seiner Betriebsposition auf das wenigstens eine Tragseil ausgeübte Gewichtskraft aufzunehmen. Dies gewährleistet trotz geringen Konstruktions- und Installationskosten eine sichere Gewichtskraftaufnahme von Photovoltaikmodulen und eine langfristig sichere und korrekte Positionierung von Photovoltaikmodulen.

Gemäß einer ersten Ausführungsform der Haltevorrichtung kann die Aufstelleinrichtung einen unteren Aufstellabschnitt und einen dem unteren Aufstellabschnitt gegenüberliegend angeordneten oberen Montageabschnitt aufweisen.

Das wenigstens eine Tragseil kann mit dem oberen Montageabschnitt Kraft übertragend dazu verbunden sein, zumindest die durch das mindestens eine Photovoltaikmodul auf das Tragseil ausgeübte Gewichtskraft an den Montageabschnitt abzuleiten. Der obere Montageabschnitt kann ein Abschnitt der Aufstelleinrichtung sein, an dem das Tragseil angebracht ist.

Ein Vorteil einer solchen Ausführungsform kann sein, dass das Tragseil auf der Höhe, auf der es ein Photovoltaikmodul halten soll, mit der Aufstelleinrichtung verbunden und beispielsweise an dieser befestigt sein kann. Eine aufwendigere Befestigung, die beispielsweise ein Umlenken des Tragseils erfordert, kann hierdurch vermieden werden.

Gemäß einer weiteren Ausführungsform der Haltevorrichtung kann die Trageeinrichtung wenigstens zwei Tragseile zum Tragen des mindestens einen Photovoltaikmoduls aufweisen, wobei die Tragseile einen Tragabschnitt zumindest für das mindestens eine Photovoltaikmodul bereitstellen.

Ein Vorteil dieser Ausführungsform kann sein, dass das Photovoltaikmodul bereits bei dessen Montage einfach auf die Tragseile gelegt und dessen Montage dadurch vereinfacht werden kann. Zudem wird die Tragkraft und Stabilität hierdurch insgesamt erhöht.

Gemäß einer weiteren Ausführungsform der Haltevorrichtung können die wenigstens zwei Tragseile im Wesentlichen parallel zur Seilrichtung verlaufend ausgerichtet sein. Alternativ können die zwei Tragseile im Wesentlichen über Kreuz ausgerichtet verlaufen. Zum Beispiel können die Tragseile unter einem Winkel zwischen 0 ° und 180 ° und beispielswiese unter einem Winkel von bis zu 30 °, bis zu 45 °, bis zu 60 °, bis zu 75 ° oder bis zu 90 ° ausgerichtet verlaufen.

Ein Vorteil dieser Ausführungsform kann sein, dass parallel verlaufende Tragseile es einer Person, die mehrere Photovoltaikmodule montiert, erleichtert, sich entlang der Seilrichtung zu bewegen. Außerdem kann es ausreichen, wenn parallel verlaufende Tragseile in und entgegen der Seilrichtung gehalten werden. Bei über Kreuz ausgerichteten Tragseilen kann ein Verkippen des auf den gekreuzt angeordneten Tragseilen liegenden Photovoltaikmoduls um die Seilrichtung herum zumindest reduziert werden.

Gemäß einer weiteren Ausführungsform der Haltevorrichtung kann die Aufstelleinrichtung ein Aufstellelement und beispielsweise einen Aufstellpfosten aufweisen.

Gemäß einer weiteren Ausführungsform der Haltevorrichtung kann die Aufstelleinrichtung zwei Aufstellelemente, die zwischen dem unteren Aufstellabschnitt und dem oberen Montageabschnitt voneinander weg verlaufend angeordnet sind, aufweisen.

Beispielsweise können die Aufstellelemente vom unteren Aufstellabschnitt zum oberen Montageabschnitt voneinander weg verlaufend angeordnet sein.

Die Aufstellelemente können in einer gemeinsamen Ebene angeordnet sein. Die gemeinsame Ebene kann zur Seilrichtung verkippt, sein. Der obere Montageabschnitt kann quer zur Seilrichtung eine Breite haben, die sich von einer ebenfalls quer zur Seilrichtung verlaufenden Breite des unteren Aufstellabschnitts unterscheiden. Beispielsweise kann die Breite des oberen Montageabschnitts größer sein kann als die Breite des unteren Aufstellabschnitts.

Die Aufstellelemente können in einer gemeinsamen Ebene angeordnet sein. Die gemeinsame Ebene kann unter einem Winkel zwischen 45 ° und 120 ° und beispielswies bis zu 50 °, bis zu 60 °, bis zu 70 °, bis zu 80 °, bis zu 90 °, bis zu 100 ° oder bis zu 110 ° zum Tragseil und/oder zur Seilrichtung verlaufen.

Ein Vorteil dieser Ausführungsform kann sein, dass aufgrund der nicht parallelen Anordnung der Aufstellelemente die Aufstelleinrichtung stabiler sein kann. Wenn die Aufstellelemente in der gemeinsamen Ebene angeordnet sind, können insbesondere mechanische Lasten parallel zur gemeinsamen Ebene besser aufgenommen werden, ohne dass sich die Aufstelleinrichtung wesentlich verformt. Eine zur Seilrichtung verkippte Ebene kann dazu beitragen, dass mechanische Lasten entlang der Seilrichtung besser aufgenommen werden, ohne dass sich die Aufstelleinrichtung wesentlich verformt.

Gemäß einer weiteren Ausführungsform der Haltevorrichtung kann die Aufstelleinrichtung im Bereich des unteren Aufstellabschnitts ein die Aufstellelemente miteinander verbindendes unteres Verbindungselement aufweisen. Die Aufstellelemente können entlang des Verbindungselementes voneinander beabstandet am Verbindungselement befestigt sein.

Die Aufstelleinrichtung kann ferner ein die Aufstellelemente im oberen Montageabschnitt miteinander verbindendes oberes Verbindungselement aufweisen. Das Tragseil kann am obere Verbindungselement angebracht sein. Der obere Montageabschnitt kann das obere Verbindungselement und Abschnitte der Aufstellelemente aufweisen, die am oberen Verbindungselement angebracht sein können.

Ein Vorteil einer solchen Ausführungsform kann sein, dass mechanische Lasten besser aufgenommen werden, ohne dass sich die Aufstelleinrichtung wesentlich verformt.

Gemäß einer weiteren Ausführungsform der Haltevorrichtung kann der untere Aufstellabschnitt einen Aufstellbodenanker aufweisen. Der Aufstellbodenanker kann ausgestaltet sein, um die Haltevorrichtung unverschieblich im Untergrund, auf dem die Haltevorrichtung beziehungsweise die Aufstelleinrichtung steht, zu verankern.

Der Untergrund kann ein natürlicher Untergrund sein. Der Untergrund kann felsig, erdig, sandig oder anders beschaffen sein. Der Aufstellbodenanker kann dazu ausgestaltet sein, in den Untergrund einschraubbar oder eindrehbar zu sein und kann hierzu mit einem spitz zulaufenden Einschraubende mit einem Gewinde versehen sein.

Das Einschraubende und etwa dessen Gewinde kann eine Länge aufweisen, die zwischen 0,5 Meter und vier Meter und beispielsweise bis zu 0,8 Meter, bis zu einem Meter, bis zu zwei Meter, bis zu 2,6 Meter oder bis zu drei Meter betragen kann. Je fester der Untergrund, desto kürzer kann die Länge sein, um eine ausreichend feste Verankerung zu ermöglichen.

Der Aufstellbodenanker kann aus einem Metall, beispielsweise Aluminium oder verzinkter Stahl, gefertigt sein und sogar daraus bestehen. Ein von dem spitz zulaufenden Einschraubende abgewandtes Montageende kann ein Gegenbefestigungselement, etwa eine durchgehende Gegenbefestigungsöffnung, aufweisen. Die Gegenbefestigungsöffnung kann sich quer zu einer Mittelachse oder einer Längsachse des Montageendes durch dieses erstrecken. Das Montageende kann zylinder- und beispielsweise rohrförmig ausgefirmt sein.

Ein Vorteil einer solchen Ausführungsform kann sein, dass die Haltevorrichtung ohne größere Erdarbeiten, etwa für Fundamente, im Untergrund, auf dem die Haltevorrichtung steht, verankert werden kann. Bei einem felsigen Untergrund kann es hilfreich sein, ein Loch für das Einschraubende in den Untergrund einzubringen und beispielsweise zu bohren.

Gemäß einer weiteren Ausführungsform der Haltevorrichtung kann der Aufstellbodenanker zwischen den Aufstellelementen an dem unteren Verbindungselement angebracht sein. Wie oben erläutert, kann das untere Verbindungselement die voneinander beabstandeten Aufstellelemente überbrücken. Folglich kann das untere Verbindungselement eine Mindestlänge zur Überbrückung aufweisen.

Ein Vorteil dieser Ausführungsform kann sein, dass, wenn das untere Verbindungselement an dem Aufstellbodenanker angebracht und insbesondere unverschiebbar mit diesem verbunden ist, das untere Verbindungselement als ein Griff zur Handhabung des Aufstellbodenankers dienen kann. Das untere Verbindungselement kann sich quer zur Mittel- oder Längsachse des Montageendes erstrecken und einen Hebel bereitstellen, mit dessen Hilfe der Aufstellbodenanker in den Untergrund hinein oder aus dem Untergrund hinaus dreh- oder schraubbar sein kann.

Der untere Aufstellabschnitt der Aufstelleinrichtung kann den Aufstellbodenanker und/oder das untere Verbindungselement und/oder Abschnitte der Aufstellelemente, die am unteren Verbindungselement angebracht sein, aufweisen.

Gemäß einer weiteren Ausführungsform der Haltevorrichtung kann die Haltevorrichtung eine Abspanneinrichtung mit einem Abspannelement und mit einem Abspannbodenanker aufweisen. Der Abspannbodenanker kann entlang der Seilrichtung von dem unteren Aufstellabschnitt der zumindest einen Aufstelleinrichtung und/oder dem Aufstellbodenanker entfernt angeordnet sein. Das Abspannelement kann den Abspannbodenanker Kraft und insbesondere Zugkraft übertragend mit der Aufstelleinrichtung und insbesondere mit dem oberen Montageabschnitt der Aufstelleinrichtung verbinden.

Die Abspanneinrichtung kann zwei die Aufstelleinrichtung und insbesondere den oberen Montageabschnitt mit dem Abspannbodenanker Zugkraft übertragend verbindende Abspannelemente aufweisen. Die Abspannelemente können zwischen dem Abspannbodenanker und der Aufstelleinrichtung, insbesondere dem oberen Montageabschnitt, voneinander weg verlaufend angeordnet sein.

Alternativ und insbesondere, wenn die Aufstelleinrichtung den Aufstellpfosten aufweist, kann die Abspanneinrichtung zwei Abspannelemente aufweisen, die beide den oberen Montageabschnitt mit dem Untergrund verbinden können. Die beiden Abspannelemente können vom oberen Montageabschnitt zum Untergrund voneinander weg weisend ausgerichtet sein. Jedes der beiden Abspannelemente kann an seinem unteren Ende an einem Abspannbodenanker befestigt sein.

Ein Vorteil einer solchen Ausführungsform kann sein, dass die Aufstelleinrichtung mechanische Lasten entlang der Seilrichtung besser aufnehmen kann, ohne dass sich die Aufstelleinrichtung wesentlich verformt.

Gemäß einer weiteren Ausführungsform der Haltevorrichtung kann die Haltevorrichtung zwei entlang der Seilrichtung hintereinander angeordnete Aufstelleinrichtungen und mindestens ein Verspannelement aufweisen. Das Verspannelement kann den oberen Montageabschnitt einer der Aufstelleinrichtungen Kraft und insbesondere Zugkraft übertragend mit dem unteren Aufstellabschnitt der anderen der Aufstelleinrichtungen verbinden. Die Aufstelleinrichtungen können in der Seilrichtung hintereinander angeordnet sein. Das mindestens eine Verspannelement kann die Aufstelleinrichtungen miteinander verbinden.

Ein Vorteil dieser Ausführungsform kann sein, dass auf eine der Aufstelleinrichtungen entlang der Seilrichtung wirkende mechanische Lasten, die deren oberen Montageabschnitt zu verschieben suchen, in den unteren Aufstellabschnitt der anderen der Aufstelleinrichtungen geleitet werden können, wodurch eine durch die Lasten hervorgerufene Bewegung des oberen Montageabschnitts der einen der Aufstelleinrichtungen zumindest verringert werden kann. Ferner kann hier auf den Abspannbodenanker verzichtet werden, sodass die Haltevorrichtung weniger Aufstellfläche benötigt.

Gemäß einer weiteren Ausführungsform kann die Haltevorrichtung mehrere entlang einer im Wesentlichen quer zur Seilrichtung verlaufenden Aufstellrichtung hintereinander angeordnete Aufstelleinrichtungen aufweisen. Wenigstens ausgewählte der Aufstelleinrichtungen können Kraft übertragend mit zumindest einem Tragseil verbunden sein.

Ein Vorteil dieser Ausführungsform kann sein, dass die Haltevorrichtung flexibel angepasst im Hinblick auf unterschiedliche örtliche Gegebenheiten, etwa die Form der Oberfläche des Untergrunds, also das Gelände, geplant und installiert werden kann.

Gemäß einer weiteren Ausführungsform der Haltevorrichtung können die in der Aufstellrichtung hintereinander angeordneten Aufstelleinrichtungen eine Anordnung von Aufstelleinrichtungen bilden, wobei die Haltevorrichtung mehrere entlang der Seilrichtung voneinander beabstandete Anordnungen von Aufstelleinrichtungen aufweist.

Ein Vorteil dieser Ausführungsform kann sein, dass die Haltevorrichtung flexibel angepasst im Hinblick auf unterschiedliche örtliche Gegebenheiten, etwa die Form der Oberfläche des Untergrunds, also das Gelände, geplant und installiert werden kann.

Gemäß einer weiteren Ausführungsform der Haltevorrichtung kann die Haltevorrichtung mehrere Tragseile aufweisen, wobei zumindest ausgewählte der mehreren Tragseile eine lichte Weite zwischen zwei der Anordnungen von Aufstelleinrichtungen überspannen.

Ein Vorteil dieser Ausführungsform kann sein, dass die Haltevorrichtung eine Vielzahl an Photovoltaikmodulen in ihrer Betriebsposition halten kann.

Gemäß einer weiteren Ausführungsform kann die Haltevorrichtung wenigstens vier Anordnungen von Aufstelleinrichtungen, die in der Seilrichtung hintereinander angeordnet sind, und wenigstens ein Verspannelement aufweisen. Die wenigstens vier Anordnungen von Aufstelleinrichtungen können jeweils zwei äußere Aufstellvorrichtungen, zwischen denen die verbleibenden Aufstelleinrichtungen der jeweiligen Anordnungen von Aufstelleinrichtungen als inneren Aufstelleinrichtungen angeordnet sein können, aufweisen.

Ein Vorteil dieser Ausführungsform kann sein, dass die Haltevorrichtung ein Feld von Photovoltaikmodulen besonders sicher in ihrer Betriebsposition halten kann.

Ein Feld von Photovoltaikmodulen kann in zwei unterschiedlichen und womöglich senkrecht zueinander verlaufenden Richtungen mehrere nebeneinander in ihrer Betriebsposition angeordnete Photovoltaikmodule aufweisen. Die Photovoltaikmodule können hintereinander und/oder nebeneinander in ihrer jeweiligen Betriebsposition liegend angeordnet sein. Die Photovoltaikmodulen können in einer Matrix mit Spalten und Zeilen angeordnet sein. Wenigstens eine der Spalten kann zu einer anderen der Spalten entlang deren Spaltenrichtung verschoben sein. Wenigstens eine der Zeilen kann zu einer anderen der Zeilen entlang deren Zeilenrichtung verschoben sein.

Gemäß einer weiteren Ausführungsform der Haltevorrichtung kann das Verspannelement einen oberen Montageabschnitt einer der inneren Aufstelleinrichtungen einer der Anordnungen von Aufstelleinrichtungen mit einem unteren Aufstellabschnitt einer der inneren Aufstelleinrichtungen einer anderen der Anordnungen von Aufstelleinrichtungen Kraft übertragend verbinden.

Ein Vorteil dieser Ausführungsform kann sein, dass auf innere Aufstelleinrichtungen entlang der Seilrichtung einwirkende mechanische Lasten Platz sparend zumindest teilweise an andere innere Aufstelleinrichtungen abgeleitet werden, wobei diese Lasten insbesondere vom jeweiligen unteren Aufstellabschnitt aufgenommen und von dort in den Untergrund geleitet werden können, was die Stabilität der Haltevorrichtung insgesamt erhöhen kann.

Gemäß einer weiteren Ausführungsform der Haltevorrichtung kann die Haltevorrichtung mehrere entlang der Seilrichtung voneinander beabstandet angeordnete Aufstelleinrichtungen aufweisen. Das wenigstens eine Tragseil kann eine lichte Weite zwischen zumindest zwei der entlang der Seilrichtung voneinander beabstandeten Aufstelleinrichtungen überspannen.

Die lichte Weite kann im Wesentlichen einem ganzzahligen Vielfachen einer Länge oder einer Breite eines Photovoltaikmoduls entsprechen.

Die lichte Weite kann besondere bevorzugt bis zu 5 m, bis zu 10 m, bis zu 15 m, bis zu 20 m, bis zu 25 m, bis zu 30 m oder sogar mehr und beispielsweise 18,444 m betragen. Die lichte Weite kann insbesondere der Abstand der oberen Montageabschnitte zueinander sein.

Ein Vorteil dieser Ausführungsform kann sein, dass die Haltevorrichtung flexibel angepasst an unterschiedliche örtliche Gegebenheiten, etwa die Form der Oberfläche des Untergrunds, also das Gelände, geplant werden kann.

Gemäß einer weiteren Ausführungsform der Haltevorrichtung können die in der Seilrichtung voneinander beabstandet angeordneten Aufstelleinrichtungen eine Abfolge von Aufstelleinrichtungen bilden. Die Haltevorrichtung kann mehrere quer zur Seilrichtung voneinander beabstandete oder aufeinander folgende Abfolgen von Aufstelleinrichtungen aufweisen.

Ein Vorteil dieser Ausführungsform kann sein, dass die Haltevorrichtung flexibel angepasst an unterschiedliche örtliche Gegebenheiten, etwa die Form der Oberfläche des Untergrunds, also das Gelände, geplant werden kann.

Gemäß einer weiteren Ausführungsform der Haltevorrichtung kann die Haltevorrichtung ein Verspannelement und wenigstens vier Aufstelleinrichtungen aufweisen, die in der Seilrichtung hintereinander angeordnet sind. Zwei der wenigstens vier Aufstelleinrichtungen können äußere Aufstellvorrichtungen sein. Zwischen den äußere Aufstellvorrichtungen können die verbleibenden Aufstelleinrichtungen als inneren Aufstelleinrichtungen angeordnet sein.

Das Verspannelement kann einen oberen Montageabschnitt einer der inneren Aufstelleinrichtungen mit einem unteren Aufstellabschnitt einer anderen der inneren Aufstelleinrichtungen Kraft übertragend verbinden.

Das Verspannelement kann ein Verspannseil sein. Das Verspannseil kann ein aus einem Metall gefertigt und beispielsweise ein Stahl- oder Drahtseil sein. Das Verspannseil kann ein Kunststoffseil oder ein Karbonseil sein. Das Verspannseil kann unterschiedliche Materialien und/oder verschiedene Materialien aufweisen. Das Verspannseil kann ein statisches Seil sein.

Ein Vorteil dieser Ausführungsform kann sein, dass auf innere Aufstelleinrichtungen entlang der Seilrichtung einwirkende mechanische Lasten Platz sparend zumindest teilweise an andere innere Aufstelleinrichtungen abgeleitet werden, wobei diese Lasten insbesondere vom jeweiligen unteren Aufstellabschnitt aufgenommen und von dort in den Untergrund geleitet werden können, was die Stabilität der Haltevorrichtung erhöhen kann.

Gemäß einer weiteren Ausführungsform der Haltevorrichtung können die eine Anordnung bildenden Aufstelleinrichtungen eine Reihe von Aufstelleinrichtungen bilden. Die eine Anordnung bildenden Aufstelleinrichtungen können entlang einer wenigstens abschnittsweise geraden Linie oder entlang einer wenigstens abschnittsweise gekrümmten Linie angeordnet sein. Zumindest Abschnitte der gekrümmten Linie können unterschiedlich stark und/oder in unterschiedliche Richtungen gekrümmt sein.

Ein Vorteil dieser Ausführungsform kann sein, dass die Haltevorrichtung flexibel angepasst im Hinblick auf unterschiedliche örtliche Gegebenheiten, etwa die Form der Oberfläche des Untergrunds, also das Gelände, geplant und installiert werden kann.

Gemäß einer weiteren Ausführungsform der Haltevorrichtung können die eine Abfolge bildenden Aufstelleinrichtungen eine Reihe von Aufstelleinrichtungen bilden. Die eine Abfolge bildenden Aufstelleinrichtungen können entlang einer wenigstens abschnittsweise geraden Linie oder entlang einer wenigstens abschnittsweise gekrümmten Linie angeordnet sein. Zumindest Abschnitte der gekrümmten Linie können unterschiedlich stark und/oder in unterschiedliche Richtungen gekrümmt sein.

Ein Vorteil dieser Ausführungsform kann sein, dass die Haltevorrichtung flexibel angepasst im Hinblick auf unterschiedliche örtliche Gegebenheiten, etwa die Form der Oberfläche des Untergrunds, also das Gelände, geplant und installiert werden kann.

Das Tragseil kann ein Metallseil und etwa ein Stahlseil, ein Kunststoffseil oder ein Karbonseil sein. Das Tragseil kann verschiedene Materialien aufweisen. Das Tragseil kann ein statisches Seil sein.

Das Tragseil kann einen Durchmesser aufweisen, der zwischen 2 mm und 12 mm und beispielsweise bis zu 3 mm, bis zu 4 mm, bis zu 5 mm, bis zu 6 mm, bis zu 7 mm, bis zu 8 mm, bis zu 9 mm, bis zu 10 mm oder bis zu 11 mm beträgt. Ist das Tragseil ein Seil aus oder mit elektrisch leitendem Material, beispielsweise Metall, kann das Tragseil zur Erdung der Module verwendet werden.

Das Abspannelement kann dazu ausgebildet sein, eine Zugkraft zu übertragen. Beispielsweise kann das Abspannelement ein Seil, ein Stift, eine Stange oder ein Rohr sein.

Ist das Abspannelement ein Seil, kann es auch als Abspannseil bezeichnet werden. Das Abspannseil kann ein Metallseil und etwa ein Stahlseil, ein Kunststoffseil oder ein Karbonseil sein. Das Abspannseil kann unterschiedliche Materialien aufweisen. Das Abspannseil kann ein statisches Seil sein.

Das Abspannseil kann einen Durchmesser aufweisen, der zwischen 2 mm und 12 mm und beispielsweise bis zu 3 mm, bis zu 4 mm, bis zu 5 mm, bis zu 6 mm, bis zu 7 mm, bis zu 8 mm, bis zu 9 mm, bis zu 10 mm oder bis zu 11 mm beträgt.

Das genannte Verspannelement kann dazu ausgebildet sein, eine Zugkraft zu übertragen. Beispielsweise kann das Verspannelement ein Seil, ein Stift, eine Stange oder ein Rohr sein.

Ist das Verspannelement ein Seil, kann es auch als Verspannseil bezeichnet werden. Das Verspannseil kann ein Metallseil und etwa ein Stahlseil, ein Kunststoffseil oder ein Karbonseil sein. Das Verspannseil kann unterschiedliche Materialien aufweisen. Das Verspannseil kann ein statisches Seil sein.

Das Verspannseil kann einen Durchmesser aufweisen, der zwischen 2 mm und 12 mm und beispielsweise bis zu 3 mm, bis zu 4 mm, bis zu 5 mm, bis zu 6 mm, bis zu 7 mm, bis zu 8 mm, bis zu 9 mm, bis zu 10 mm oder bis zu 11 mm beträgt.

Das Aufstellelement kann starr ausgebildet sein. Beispielswiese kann das Aufstellelement eine Stange sein. Ist die Stange hohl, kann das Aufstellelement auch als Rohr bezeichnet werden. Das Aufstellelement kann aus einem Metall, beispielsweise Aluminium oder verzinkter Stahl, gefertigt sein und sogar daraus bestehen.

Das Verbindungselement kann starr ausgebildet sein. Beispielswiese kann das Verbindungselement eine Stange sein. Ist die Stange hohl, kann das Aufstellelement auch als Rohr bezeichnet werden. Das Verbindungselement kann aus einem Metall und beispielsweise auf Aluminium oder verzinktem Stahl gefertigt sein oder daraus bestehen.

Gemäß einer weiteren Ausführungsform der Haltevorrichtung können die Aufstellelemente jeder der zwei hintereinander angeordneten Aufstelleinrichtungen eine gemeinsame Ebene aufspannen.

Die gemeinsame Ebene einer der Aufstelleinrichtungen kann unter einem Winkel zwischen 0 ° und 180 ° und beispielswiese bis zu 10°, bis zu 20 °, bis zu 30 °, bis zu 40 ° bis zu 50 °, bis zu 60 °, bis zu 70 °, bis zu 80 °, bis zu 90 °, bis zu 120 ° oder bis zu 150 ° zur Ebene der anderen Aufstelleinrichtung verlaufen.

Ein weiterer unabhängiger Aspekt der vorliegenden Erfindung betrifft eine Modulbefestigungsvorrichtung. Eine solche Modulbefestigungsvorrichtung kann Bestandteil einer voranstehend beschriebenen Haltevorrichtung sein.

Eine erfindungsgemäße Modulbefestigungsvorrichtung ist mit einem Basiselement versehen, das zwei voneinander abgewandte Seiten und zwei sich zwischen diesen Seiten erstreckende und in einer Höhenrichtung des Basiselementes voneinander beabstandete Durchgangsöffnungen aufweist. Ferner weist die Modulbefestigungsvorrichtung ein Befestigungselement auf, wobei das Befestigungselement an einer der Seiten angeordnet ist und einen vom Basiselement weg vorspringenden Befestigungsvorsprung aufweist, der dazu ausgestaltet ist, um an einem Photovoltaikmodul befestigt zu werden.

Dadurch, dass das Basiselement zwei Durchgangsöffnungen aufweist, kann die Modulbefestigungsvorrichtung einfach in eine Haltevorrichtung und beispielsweise in die erfindungsgemäße Haltevorrichtung integriert werden. So kann sich durch eine der Durchgangsöffnungen ein Tragelement erstrecken, etwa ein Stahlträger oder ein Tragseil. Durch die andere der Durchgangsöffnungen können Anschlussleitungen, etwa Energieleitungen und/oder Datenleitungen, verlaufen. Das Basiselement ist folglich besonders einfach und daher kostengünstig zu montieren.

Gemäß einer ersten Ausführungsform der Modulbefestigungsvorrichtung kann das Befestigungselement parallel zu der Seite, an der das Befestigungselement angebracht ist, beabstandet von einer der Durchgangsöffnungen angeordnet sein. Das Befestigungselement kann eine Führungsöffnung aufweisen, die mit der anderen der Durchgangsöffnungen eine durchgehende Öffnung bildet. Durch die durchgehende Öffnung kann sich ein Tragelement, etwa das Tragseil, erstrecken und die Position der Modulbefestigungsvorrichtung entlang des Tragelementes, etwa die Seilrichtung, führen.

Das Befestigungselement kann überlappungsfrei mit der einen der Durchgangsöffnungen angeordnet sein. Überlappungsfrei kann bedeuten, dass eine Projektion der Durchgangsöffnung entlang einer Richtung, entlang sich die Durchgangsöffnung durch das Basiselement erstreckt, nicht durch das Befestigungselement verläuft. Das Befestigungselement kann so angeordnet sein, dass es nicht in die eine der Durchgangsöffnungen ragt. Die Höhenrichtung kann im montierten Zustand der Modulbefestigungsvorrichtung im Wesentlichen entgegen der Schwerkraftrichtung und/oder im Wesentlichen senkrecht zum Untergrund und weg davon weisend verlaufen.

Ein Vorteil dieser Ausführungsform kann sein, dass in einem montierten Zustand der Modulbefestigungsvorrichtung ein Tragelement, etwa das Tragseil, durch die durchgehende Öffnung verlaufen kann, sodass das Tragelement das Photovoltaikmodul am Befestigungselement positionieren kann, wodurch sich das Befestigen des Photovoltaikmoduls am Befestigungselement vereinfachen kann.

Ein weiterer Vorteil kann sein, dass die Modulbefestigungsvorrichtung in ihrem montierten Zustand entlang einer Längsrichtung des Tragelementes auf dem Tragelement, etwa dem Tragseil, verschiebbar angeordnet werden kann, sodass Photovoltaikmodule noch einfacher zu montieren sind und in gewünschter Position angeordnet werden können.

Ein weiterer Vorteil dieser Ausführungsform kann sein, dass die Modulbefestigungsvorrichtung in ihrem montierten Zustand entlang einer Längsrichtung des Tragelementes, etwa die Seilrichtung, auf dem Tragelement, etwa dem Tragseil, verschiebbar sein kann, sodass thermische Längenänderungen des Tragelementes, die sich von thermische Längenänderungen des an der Modulbefestigungsvorrichtung befestigten Photovoltaikmoduls unterscheiden können, nicht zu das Photovoltaikmodul beschädigenden mechanischen Spannungen führen.

Gemäß einer weiteren Ausführungsform der Modulbefestigungsvorrichtung kann die durchgehende Öffnung im montierten Zustand der Modulbefestigungsvorrichtung in der Höhenrichtung hinter der einen der Durchgangsöffnungen angeordnet sein.

Ein Vorteil dieser Ausführungsform der Modulbefestigungsvorrichtung kann sein, dass Leitungen, die durch die eine der Durchgangsöffnungen verlaufen und von dieser getragen werden können, in der Schwerkraftrichtung vor dem an der Modulbefestigungsvorrichtung befestigten Photovoltaikmodul angeordnet sind und das Photovoltaikmodul zumindest weniger verschatten. Ferner können die Leitungen die Lage des Photovoltaikmoduls um die Seilrichtung herum stabilisieren.

Gemäß einer weiteren Ausführungsform der Modulbefestigungsvorrichtung kann der Befestigungsvorsprung eine Befestigungsstruktur, die parallel zu der Seite, an der das Befestigungselement angeordnet ist, verläuft, aufweisen. Die Befestigungsstruktur kann eine Befestigungsöffnung oder ein Befestigungsstift sein.

Ist die Befestigungsstruktur eine Befestigungsöffnung, so kann ein Photovoltaikmodul mithilfe einer Schraube, die durch das Photovoltaikmodul und die Befestigungsöffnung verläuft, befestigt werden. Die Befestigungsöffnung kann ein Gewinde, etwa ein Innengewinde, für die Schraube aufweisen. Die Schraube kann einfach von unten durch das Photovoltaikmodul und danach in die die Befestigungsöffnung schraubbar sein. Alternativ kann das Photovoltaikmodul einen Befestigungsstift aufweisen, der in die Befestigungsöffnung von oben einsetzbar sein kann und der optional ein Gewinde aufweisen kann.

Alternativ kann das Photovoltaikmodul mit einer auf die Schraube aufgeschraubten Gegenschraube, beispielsweise eine Mutter oder eine Flügelschraube, fixiert werden.

Ist die Befestigungsstruktur ein Befestigungsstift, so kann sich dieser in der Höhenrichtung weg vom Befestigungsvorsprung erstrecken. Der Befestigungsstift kann sich weg von der einen Durchgangsöffnung und/oder parallel zu der Seite, an der das Befestigungselement angeordnet ist, erstrecken. Weist das Photovoltaikmodul eine Aufnahme für den Befestigungsstift auf, kann diese den Befestigungsstift aufnehmen. Der Befestigungsstift kann das Photovoltaikmodul positionieren. Der Befestigungsstift kann mit einem Gewinde und beispielsweise einem Außengewinde versehen sein. Das Photovoltaikmodul kann mit einer auf den Befestigungsstift aufgeschraubten Gegenschraube, beispielsweise eine Mutter oder eine Flügelschraube, fixiert werden.

Ein Vorteil dieser Ausführungsform der Modulbefestigungsvorrichtung kann sein, dass Photovoltaikmodule besonders effizient und daher mit geringem Aufwand an der Modulbefestigungsvorrichtung befestigbar sind. Optional können Photovoltaikmodule durch den Befestigungsstift sogar relativ zur Modulbefestigungsvorrichtung positioniert werden.

Gemäß einer weiteren Ausführungsform der Modulbefestigungsvorrichtung kann das Befestigungselement ein Winkelblech sein. Ein Schenkel des Winkelblechs, mit dem das Befestigungselement am Basiselement angeordnet ist, kann die Führungsöffnung aufweisen. Der andere Schenkel kann die Befestigungsstruktur aufweisen.

Ein Vorteil dieser Ausführungsform der Modulbefestigungsvorrichtung kann sein, dass Winkelbleche besonders einfach und kostengünstig, beispielsweise durch Stanz- und Biegeverfahren, herstellbar sind.

Gemäß einer weiteren Ausführungsform der Modulbefestigungsvorrichtung kann die Modulbefestigungsvorrichtung ein weiteres Befestigungselement mit einem Befestigungsvorsprung aufweisen, das an der anderen der einander gegenüberliegenden Seiten angeordnet ist.

Ein Vorteil dieser Ausführungsform der Modulbefestigungsvorrichtung kann sein, dass mit nur einer Modulbefestigungsvorrichtung zwei Photovoltaikmodule, die in der Seilrichtung hintereinander angeordnet sind, befestigt werden können.

Eine zwischen den gegenüberliegenden Seiten des Basiselementes verlaufende Dicke des Basiselementes kann dabei den Abstand zwischen mit der Modulbefestigungsvorrichtung aneinander befestigten Photovoltaikmodulen vorgeben.

Die Dicke kann bei der Planung einer etwaigen Photovoltaik-Freilandanlage so gewählt werden, dass mehr Module pro Fläche anbringbar sind - also bei geringerer Dicke - oder mehr Sonnenlicht an den zwischen den mit der Modulbefestigungsvorrichtung aneinander befestigten Photovoltaikmodulen vorbei scheint - also bei größerer Dicke.

Eine größere Dicke kann vorteilhaft sein, wenn die Modulbefestigungsvorrichtung mit einer auf einem landwirtschaftlich bewirtschafteten Untergrund aufgestellt ist, sodass angebaute Pflanzen ausreichend Sonnenlicht erhalten.

Ferner kann eine größere Dicke kann vorteilhaft sein, wenn bifaziale Photovoltaikmodule verwendet werden, sodass bei einem größeren Abstand zwischen den bifazialen Photovoltaikmodulen mehr Licht auf den Untergrund treffen und von diesem zur zusätzlichen Energiewandlung auf die aktive Rückseite der bifazialen Photovoltaikmodule reflektiert werden kann.

Die jeweilige Dicke des Basiselements kann bei der Planung einer etwaigen Photovoltaik-Freilandanlage so gewählt werden, dass die Gesamtenergiewandlung auf der Oberseite und Rückseite beziehungsweise Unterseite von bifazialen Photovoltaikmodule verbessert oder optimiert wird, insbesondere im Hinblick auf den jeweiligen Untergrund oder das zu erwartende und/oder durchschnittliche Reflexionsverhalten des jeweiligen Untergrunds.

Anstelle der Dicke des Basiselements kann auch die Anzahl von Basiselementen je Modulbefestigungsvorrichtung beziehungsweise die Anordnung von Distanzscheiben oder Distanzhaltern realisiert werden, um den Abstand von angrenzenden Photovoltaikmodulen zueinander gezielt einzustellen.

Gemäß einer weiteren Ausführungsform der Modulbefestigungsvorrichtung können sich die Befestigungsvorsprünge in entgegengesetzte Richtungen erstrecken. Insbesondere kann die Modulbefestigungsvorrichtung spiegelsymmetrisch ausgestaltet sein.

Ein Vorteil dieser Ausführungsform kann sein, dass an der Modulbefestigungsvorrichtung zu befestigende Photovoltaikmodule einfacher zu einander auszurichten sind.

Gemäß einer weiteren Ausführungsform der Modulbefestigungsvorrichtung kann das Basiselement die Form eines Quaders oder die Form einer Platte haben. Das Basiselement und/oder das wenigstens eine Befestigungselement kann beispielsweise aus einem Metall - zum Beispiel aufweisend verzinkter Stahl oder Aluminium - und/oder einem Kunststoff und/oder einem Kompositmaterial und/oder aus Gummi gefertigt sein.

Ein Vorteil dieser Ausführungsform kann sein, dass das Basiselement einfach und kostengünstig herzustellen ist und eine hohe Betriebssicherheit aufweist.

Ein weiterer unabhängiger Aspekt der vorliegenden Erfindung betrifft eine Stangenbefestigungsvorrichtung. Eine solche Stangenbefestigungsvorrichtung kann Bestandteil einer voranstehend beschriebenen Haltevorrichtung sein.

Eine erfindungsgemäße Stangenbefestigungsvorrichtung ist mit zwei Befestigungsteilen versehen, die in einem aneinander montierten Zustand eine Stangendurchgangsöffnung begrenzen oder umgreifen. Eines der Befestigungsteile weist eine sich von der Stangendurchgangsöffnung weg erstreckende Befestigungsaufnahme auf.

Dadurch, dass eines der Befestigungsteile die sich von der Stangendurchgangsöffnung weg erstreckende Befestigungsaufnahme aufweist, kann die die Stangenbefestigungsvorrichtung einfach an anderen Elementen oder Bauteilen angebracht werden, um eine Stange unverschiebbar relativ zu dem anderen Element oder Bauteil mit diesem zu verbinden.

Stangen, etwa Stäbe oder Rohre, können tragende oder starre Teile einer Aufstelleinrichtung einer Haltevorrichtung für Photovoltaikmodule, insbesondere der erfindungsgemäßen Haltevorrichtung, bereitstellen, wobei die Stangenbefestigungsvorrichtung weitere funktionale Elemente, etwa Anschlagmittel, zum Beispiel zum Anbringen oder Anschlagen eines Tragelementes, aufweisen kann, die somit einfach an diesen Stangen befestigt werden können.

Gemäß einer ersten Ausführungsform der Stangenbefestigungsvorrichtung können die Befestigungsteile dazu ausgebildet sein, an einer Seite der Stangendurchgangsöffnung wiederholt lösbar aneinander befestigbar zu sein. An einer der einen Seite gegenüberliegenden anderen Seite kann eines der Befestigungsteile einen Befestigungsvorsprung aufweisen. Das andere der Befestigungsteile kann an der anderen Seite eine Aufnahme für den Befestigungsvorsprung aufweisen. Der Befestigungsvorsprung und die Aufnahme können ein Scharnier bilden. Das Scharnier kann auch anders und beispielsweise wie bei einem Flügelscharnier mit einer Scharnierachse oder einem Scharnierstift ausgebildet sein, wobei die beiden Befestigungsteile die Scharnierflügel bilden können.

Ein Vorteil dieser Ausführungsform der Stangenbefestigungsvorrichtung kann sein, dass die Befestigungsteile unabhängig voneinander handhabbar und einfach aneinander anbringbar sind.

Gemäß einer weiteren Ausführungsform der Stangenbefestigungsvorrichtung können die Befestigungsteile an der anderen Seite jeweils eine Befestigungsöffnung zur Aufnahme einer Befestigungsstange eines Befestigungsmittels aufweisen, wobei die Befestigungsöffnungen im aneinander montierten Zustand miteinander Fluchten. Die Befestigungsstange keine einen Schraubabschnitt mit einem Außengewinde aufweisen. Eine der Befestigungsöffnungen kann ein Innengewinde aufweisen. Alternativ kann die Befestigungsstange in einer der Befestigungsöffnungen unverschiebbar und schwenkbar aufgenommen sein.

Ein Vorteil dieser Ausführungsform der Stangenbefestigungsvorrichtung kann sein, dass Befestigungsteile einfach montierbar sind.

Gemäß einer weiteren Ausführungsform der Stangenbefestigungsvorrichtung kann eines der Befestigungsteile einen sich tangential zur Stangendurchgangsöffnung öffnenden Einsetzschlitz aufweisen.

Ein Vorteil dieser Ausführungsform der Stangenbefestigungsvorrichtung kann sein, dass die Befestigungsstange nicht durch zwei Löcher zu fädeln ist, sondern in eine der Befestigungsöffnungen einsteckbar oder einschraubbar und in den Einsetzschlitz einsetz- oder einschwenkbar sein kann.

Gemäß einer weiteren Ausführungsform der Stangenbefestigungsvorrichtung kann eines der Befestigungsteile eine sich von der Stangendurchgangsöffnung weg erstreckende Befestigungsaufnahme aufweisen.

Ein Vorteil dieser Ausführungsform der Stangenbefestigungsvorrichtung kann sein, dass ein Befestigungsmittel zur Befestigung der Stangenbefestigungsvorrichtung an einem weiteren Element, beispielsweise einem Aufstellbodenanker oder einem Abstellbodenanker, einer anderen Stangenbefestigungsvorrichtung oder einer Haltevorrichtung für Photovoltaikmodule anbringbar ist.

Gemäß einer weiteren Ausführungsform der Stangenbefestigungsvorrichtung kann die Stangenbefestigungsvorrichtung ein Befestigungsmittel, etwa mit einer von den beiden Befestigungsteilen beabstandet angeordneten Befestigungsachse, zur Befestigung der Stangenbefestigungsvorrichtung an einem Bodenanker, und ein Anbringelement, etwa ein Befestigungsstift, aufweisen.

Die Befestigungsachse kann sich in ihrem montierten Zustand zumindest abschnittsweise durch die Gegenbefestigungsöffnung erstrecken und unverlierbar an dem Befestigungsstift angebracht sein. Das Befestigungsmittel kann einen Befestigungsanker formen. Der Befestigungsanker kann stockankerförmig oder T-förmig ausgestaltet sein.

Das Befestigungsmittel einen Befestigungsstift aufweisen, der die Befestigungsachse mit einem der beiden Befestigungsteile verbindet und der sich durch die Befestigungsaufnahme erstrecken kann. Der Befestigungsstift und die Befestigungsachse können gemeinsam den Befestigungsanker formen.

Ein Vorteil dieser Ausführungsform der Stangenbefestigungsvorrichtung kann sein, dass weitere Elemente, insbesondere Bodenanker wie etwa ein Aufstellbodenanker oder ein Abstellbodenanker, mit der Stangenbefestigungsvorrichtung einfach und sicher an einer Stange befestigbar sind.

Gemäß einer weiteren Ausführungsform der Stangenbefestigungsvorrichtung kann die Stangenbefestigungsvorrichtung zwei weitere Befestigungsteile aufweisen, die in einem aneinander montierten Zustand eine weitere Stangendurchgangsöffnung von einander gegenüberliegenden Seiten umgreifen. Eines der weiteren Befestigungsteile kann an einem der anderen Befestigungsteile befestigt sein.

Eine mehr als zwei und insbesondere vier Befestigungsteile aufweisende Stangenbefestigungsvorrichtung kann auch als Stangenverbindungsvorrichtung bezeichnet werden

Ein Vorteil dieser Ausführungsform der Stangenbefestigungsvorrichtung kann sein, dass zwei Stangen unbeweglich zueinander fixierbar sein können.

Gemäß einer weiteren Ausführungsform der Stangenbefestigungsvorrichtung kann die Stangenbefestigungsvorrichtung wenigstens ein Anschlagmittel, beispielsweise ein Anschlagring, eine Anschlagöse oder einen Anschlaghaken, aufweisen.

Ein Vorteil dieser Ausführungsform der Stangenbefestigungsvorrichtung kann sein, dass Elemente, etwa Tragelemente, beispielswiese Tragseile, Verspannelemente oder Abspannelemente, einfach an der Stangenbefestigungsvorrichtung angeschlagen werden können, etwa wenn die Tragelemente, Verspannelemente oder Abspannelemente Gegenanschlagmittel, zum Beispiel Anschlaghaken, Anschlagringe oder Anschlagösen aufweisen.

Zumindest die Befestigungsteile der Stangenbefestigungsvorrichtung können aus einem Metall und beispielsweise auf Aluminium oder verzinktem Stahl gefertigt sein oder daraus bestehen.

Gemäß einer weiteren Ausführungsform kann die Haltevorrichtung die erfindungsgemäße Modulbefestigungsvorrichtung und/oder die erfindungsgemäße Stangenbefestigungsvorrichtung aufweisen.

Ein Vorteil dieser Ausführungsform der Haltevorrichtung kann sein, dass diese besonders einfach und preiswert bereitgestellt werden kann und einen sicheren Betrieb von Photovoltaikmodulen gewährleistet.

Gemäß einer weiteren Ausführungsform der Haltevorrichtung kann die Haltevorrichtung mit den erfindungsgemäßen Komponenten an Erfordernisse der gleichzeitigen landwirtschaftlichen Nutzung des Untergrunds, auf dem die Haltevorrichtung steht, angepasst sein.

Insbesondere kann die Haltevorrichtung so dimensioniert und/oder angeordnet sein, dass diese von landwirtschaftlichen Fahrzeugen unterfahrbar ist. Beispielsweise kann die Aufstelleinrichtung so dimensioniert sein, dass auf dem jeweiligen Tragseil oder den Tragseilen in ihrer Betriebsposition liegende Photovoltaikmodule in einer Höhe von wenigstens zwei Metern, mindestens drei Metern, zumindest vier Metern, bis zu fünf Metern oder sogar bis zu sechs Metern über dem Untergrund angeordnet sind.

Ein Vorteil dieser Ausführungsform der Haltevorrichtung kann sein, dass mit der Haltevorrichtung eine Mehrfachnutzung des Untergrunds, etwa zum Aufstellen der Haltevorrichtung mit Photovoltaikmodulen und zur landwirtschaftlichen Bewirtschaftung des Untergrunds oder um dort eine Heu- oder Naturwiese entstehen zu lassen, ermöglicht.

Die Haltevorrichtung kann bei Temperaturen zwischen -60 °C und 95 °C, und beispielsweise zwischen -40 °C, -30 °C, -20 °C oder -10° C als Untergrenze, und 60 °C, 70 °C, 80 °C oder 90 °C als Obergrenze einsetzbar sein.

Die Haltevorrichtung kann bei Luftfeuchten zwischen 0 % und 99 %, und beispielsweise zwischen -10 %, 20 % oder 30 % als Untergrenze, und 60 %, 70 %, 80 % oder 90 % als Obergrenze einsetzbar sein. Die Haltevorrichtung kann dazu ausgebildet sein, in Feuchtgebieten oder in Küstennähe einsetzbar zu sein.

Die Haltevorrichtung kann dazu ausgebildet sein, in Windzonen mit Windlasten bis zu 1, bis zu 2, bis zu 3, bis zu 4, bis zu 5, oder darüber hinaus einsetzbar zu sein.

Die Haltevorrichtung kann mit den erfindungsgemäßen Komponenten an verschiedene Gelände, etwa unwegsames Gelände oder schwer erschließbares Terrain, angepasst planbar zu sein.

Die Haltevorrichtung kann dazu ausgebildet sein, bei hoher UV-Last, etwa im Gebirge, einsetzbar zu sein.

Die Haltevorrichtung kann zumindest einen Stringwechselrichter aufweisen, der an ausgewählten oder allen Photovoltaikmodulen wenigstens einer Anordnung und/oder wenigstens einer Abfolge angeschlossen sein kann.

Die Haltevorrichtung kann einen Mikrowechselrichter aufweisen, der an ausgewählten Photovoltaikmodulen wenigstens einer Anordnung und/oder wenigstens einer Abfolge angeschlossen sein können. An den Mikrowechselrichter können bis zu 50 Photovoltaikmodule und beispielsweise bis zu 5, bis zu 10, bis zu 12, bis zu 16, bis zu 20, bis zu 30, bis zu 40 oder zum Beispiel 6 oder 12 Photovoltaikmodule anschließbar sein.

Der Mikrowechselrichter kann so ausgestaltet sein, dass an ihm eine Wechselspannung abgreifbar ist. Beispielsweise kann der Mikrowechselrichter eine Steckdose aufweisen. Wenn Arbeiten, etwa Wartungsarbeiten, an der jeweiligen Photovoltaik-Freilandanlage zu tätigen sind, kann der Mikrowechselrichter hierfür in vorteilhafter Weise und an dezentraler Position elektrische Energie direkt bereitstellen.

Die Haltevorrichtung kann dazu ausgebildet sein, Kondensat, Schnee und/oder Eis auf Photovoltaikmodulen, die von der Haltevorrichtung gehalten werden, zu entfernen. Hierzu kann die Haltevorrichtung eine Rückstromquelle aufweisen, die dazu ausgebildet ist, Strom durch die Photovoltaikmodule zu leiten und diese somit zu heizen.

Das Tragseil kann mit einer Zugkraft von bis zu 200 kN und beispielsweise von bis zu 50 kN, bis zu 70 kN, bis zu 90 kN, bis zu 100 kN, bis zu 125 kN, bis zu 150 kN oder bis zu 175 kN vorgespannt sein, insbesondere mittels eines Vorspannwerkzeugs.

Das Tragseil kann dazu ausgebildet sein, Photovoltaikmodule mit einem Gesamtgewicht von bis zu 2000 kg und beispielswiese von bis zu 500 kg, bis zu 750 kg, bis zu 1000 kg, bis zu 1250 kg, bis zu 1500 kg oder bis zu 1750 kg zu tragen.

Das Tragseil kann ferner dazu ausgebildet sein, an einer Belastungsstelle eine Gesamtlast von bis zu 2000 kg und beispielswiese von bis zu 500 kg, bis zu 750 kg, bis zu 1000 kg, bis zu 1250 kg, bis zu 1500 kg oder bis zu 1750 kg zu tragen.

Ein weiterer Aspekt der vorliegenden Erfindung betrifft eine Photovoltaikanlage, insbesondere eine Freiland-Photovoltaikanlage.

Eine erfindungsgemäße Photovoltaikanlage weist mindestens ein Photovoltaikmodul und mindestens eine voranstehend beschriebene Haltevorrichtung auf. Ferner kann eine solche Photovoltaikanlage wenigstens eine voranstehend beschriebene Modulbefestigungsvorrichtung und/oder wenigstens eine voranstehend beschriebene Stangenbefestigungsvorrichtung aufweisen.

Gemäß einer weiteren Ausführungsform kann die Photovoltaikanlage eine Vielzahl von Photovoltaikmodulen aufweisen, die mit mehreren der Modulbefestigungsvorrichtungen an den jeweiligen Tragseilen angebracht sein können.

Ein Vorteil dieser Ausführungsform der Haltevorrichtung kann sein, dass mit geringem Aufwand eine große Fläche zur Wandlung von Sonnenenergie zu elektrischer Energie bereitstellbar ist.

Mit anderen Worten betrifft die vorliegende Erfindung unter anderem auch Freiland-Photovoltaikanlagen.

Um Freiland-Photovoltaikanlagen einfacher und günstiger bereitstellen zu können, kann erfindungsgemäß vorgesehen sein, dass eine Haltevorrichtung für Photovoltaikmodule mindestens ein Tragseil zum Tragen mindestens eines Photovoltaikmoduls aufweist.

Ferner kann erfindungsgemäß vorgesehen sein, dass eine Modulbefestigungsvorrichtung zur Befestigung eines Photovoltaikmoduls, beispielsweise an einem Tragseil einer erfindungsgemäßen Haltevorrichtung, zwei Öffnungen und ein von einer der Öffnungen beanstandet angeordnetes Befestigungselement zur Befestigung an einem Photovoltaikmodul aufweist.

Weiters kann erfindungsgemäß vorgesehen sein, dass eine Stangenbefestigungsvorrichtung zur Befestigung an Stangen, etwa Stangen, die eine Aufstelleinrichtung der erfindungsgemäßen Haltevorrichtung bilden können, zweiteilig ausgebildet ist, wobei eines der Befestigungsteile eine Befestigungsaufnahme aufweist.

### Kurze Beschreibung der Zeichnungen

Zum besseren Verständnis der vorliegenden Erfindung ist nachfolgend auf die Zeichnungen Bezug genommen. Diese zeigen schematisch lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

Es zeigen:
- Figur 1: eine Haltevorrichtung gemäß einem Ausführungsbeispiel der vorliegenden Erfindung in einer schematischen Perspektivansicht,
- Figur 2: die Haltevorrichtung des Ausführungsbeispiels der Figur 1 mit Photovoltaikmodulen in Betriebsposition,
- Figur 3: eine Haltevorrichtung gemäß einem weiteren Ausführungsbeispiel der vorliegenden Erfindung in einer schematischen Perspektivansicht,
- Figur 4: die Haltevorrichtung des Ausführungsbeispiels der Figur 3 mit Photovoltaikmodulen in Betriebsposition,
- Figur 5: die Haltevorrichtung des Ausführungsbeispiels der Figuren 3 und 4 in einer schematischen Detailansicht,
- Figur 6: die Haltevorrichtung der Detailansicht aus Figur 5 in einer vergrößerten schematischen Aufsicht,
- Figur 7: eine schematische Perspektivansicht eines vergrößerten Details der Haltevorrichtung der Ausführungsbeispiele der vorherigen Figuren,
- Figur 8: eine weiter vergrößerte Detailansicht der in Figur 7 gezeigten Haltevorrichtung,
- Figur 9: eine weiter vergrößerte Ansicht eines anderen Details der in Figur 7 gezeigten Haltevorrichtung,
- Figur 10: eine Stangenbefestigungsvorrichtung gemäß einem Ausführungsbeispiel der vorliegenden Erfindung in einer schematischen Perspektivansicht,
- Figur 11: ein Aufstellbodenanker der Haltevorrichtung der Ausführungsbeispiele der vorherigen Figuren in einer schematischen Perspektivansicht mit der Stangenbefestigungsvorrichtung des Ausführungsbeispiels der Figur 10,
- Figur 12: ein erstes Ausführungsbespiel der Stangenverbindungsvorrichtung in einer schematischen Perspektivansicht, und
- Figur 13: eine Modulbefestigungsvorrichtung gemäß einem Ausführungsbeispiel der vorliegenden Erfindung in einer schematischen Perspektivansicht.

### Wege zur Ausführung der Erfindung

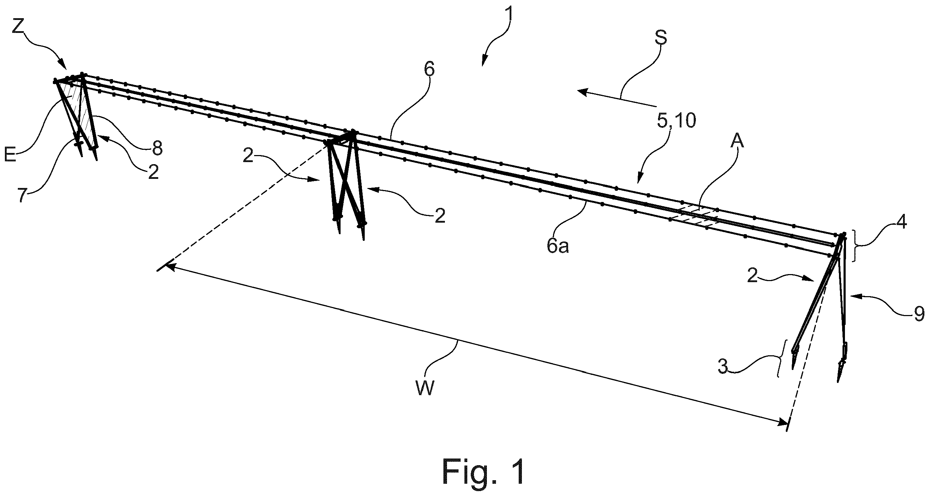

Figur 1 zeigt ein Ausführungsbeispiel einer Haltevorrichtung 1. Die Haltevorrichtung 1 weist zumindest eine Aufstelleinrichtung 2 zum Aufstellen der Haltevorrichtung 1 auf einem Untergrund auf. Der Untergrund kann ein unbefestigter Untergrund und beispielsweise eine landwirtschaftlich genutzte Fläche und/oder ein befestigter Untergrund sein.

Die Aufstelleinrichtung 2 weist einen unteren Aufstellabschnitt 3 und einen dem unteren Aufstellabschnitt 3 gegenüberliegend angeordneten oberen Montageabschnitt 4 auf. Ferner weist die Haltevorrichtung 1 zumindest eine Trageeinrichtung 5 auf. Die Trageeinrichtung 5 ist dazu ausgebildet, mindestens ein Photovoltaikmodul in seiner Betriebsposition zu tragen.

Die zumindest eine Trageeinrichtung 5 weist wenigstens ein sich in einer Seilrichtung S erstreckendes Tragseil 6 zum Tragen des mindestens einen Photovoltaikmoduls auf. Das wenigstens eine Tragseil 6 ist dazu ausgebildet, zumindest eine durch das mindestens eine Photovoltaikmodul in seiner Betriebsposition auf das wenigstens eine Tragseil 6 ausgeübte Gewichtskraft aufzunehmen.

In seiner Betriebsposition kann das Photovoltaikmodul im Wesentlichen senkrecht zur Schwerkraft und/oder parallel zum Untergrund ausgerichtet sein. Ferner ist das wenigstens eine Tragseil 6 so mit dem oberen Montageabschnitt 4 Kraft übertragend verbunden, dass es zumindest die durch das mindestens eine Photovoltaikmodul auf das Tragseil 6 ausgeübte Gewichtskraft an den oberen Montageabschnitt 4 ableitet.

Wie in Figur 1 gezeigt, kann die Trageeinrichtung 5 wenigstens zwei Tragseile 6, 6a zum Tragen des mindestens einen Photovoltaikmoduls aufweisen. Die Tragseile 6, 6a können eine Auflage- und/oder Tragabschnitt A zumindest für das mindestens eine Photovoltaikmodul bereitstellen.

Die wenigstens zwei Tragseile 6, 6a können im Wesentlichen parallel zur Seilrichtung S, also parallel zueinander, verlaufend ausgerichtet sein. Alternativ können die zwei Tragseile 6, 6a unter einem Winkel zwischen 0 ° und 180 ° und beispielswiese unter einem Winkel von bis zu 30 °, bis zu 45 °, bis zu 60 °, bis zu 75 ° oder bis zu 90 ° oder im Wesentlichen über Kreuz ausgerichtet verlaufen.

Zumindest ausgewählte der Tragseile 6, 6a können eine lichte Weite W zwischen zwei der Aufstelleinrichtungen 2 überspannen. Die lichte Weite W kann im Wesentlichen einem ganzzahligen Vielfachen einer Länge oder einer Breite eines Photovoltaikmoduls entsprechen.

Die lichte Weite W kann bis zu 5 m, bis zu 10 m, bis zu 15 m, bis zu 20 m, bis zu 25 m, bis zu 30 m oder sogar mehr und beispielsweise 18,444 m betragen. Die lichte Weite W kann insbesondere der Abstand der oberen Montageabschnitte 4 zueinander sein.

Die Aufstelleinrichtung 2 kann zwei Aufstellelemente 7, 8 aufweisen Die Aufstellelemente 7, 8 können zwischen dem unteren Aufstellabschnitt 3 und dem oberen Montageabschnitt 4 voneinander weg verlaufend angeordnet sind. Beispielsweise können die Aufstellelemente 7, 8 vom unteren Aufstellabschnitt 3 zum oberen Montageabschnitt 4 voneinander weg verlaufend angeordnet sein. Ein Winkel zwischen den Aufstellelementen 7, 8 kann bis zu 40 °, bis zu 30 °, bis zu 25 °, bis zu 20 °, bis zu 15° oder bis zu 10 ° betragen.

Die Aufstellelemente 7, 8 können in einer gemeinsamen Ebene E angeordnet sein. Die gemeinsame Ebene E kann zur Seilrichtung S verkippt, sein. Ein Winkel zwischen der gemeinsamen Ebene E und der Seilrichtung S kann zwischen 45 ° und 120 ° und beispielswies bis zu 50 °, bis zu 60 °, bis zu 70 °, bis zu 80 °, bis zu 90 °, bis zu 100 ° oder bis zu 110 ° betragen.

Die Aufstellelemente 7, 8 können starr ausgebildet sein. Beispielswiese kann wenigstens eines der Aufstellelemente 7, 8 eine Stange sein. Alternativ kann wenigstens eines der Aufstellelemente 7, 8 auch als ein Rohr ausgeformt sein.

Die Aufstellelemente 7, 8 können aus einem Metall und beispielsweise auf Aluminium oder verzinktem Stahl gefertigt sein oder daraus bestehen.

Die Haltevorrichtung 1 kann eine Abspanneinrichtung 9 aufweisen. Die Abspannvorrichtung 9 kann am oberen Montageabschnitt 4 Zugkräfte aufnehmend angebracht sein. Die Abspanneinrichtung 9 kann so im Untergrund verankert sein, dass sie die aufgenommenen Zugkräfte in den Untergrund ableitet.

Die Haltevorrichtung 1 kann mehrere in der Seilrichtung S voneinander beabstandet angeordneten Aufstelleinrichtungen 2 aufweisen, die eine Abfolge Z von Aufstelleinrichtungen 2 bilden können. Die Haltevorrichtung 1 kann mehrere quer zur Seilrichtung S voneinander beabstandete Abfolgen Z von Aufstelleinrichtungen 2 aufweisen.

Die die Abfolge Z bildenden Aufstelleinrichtungen 2 können eine Reihe von Aufstelleinrichtungen 2 bilden. Die die Abfolge Z bildenden Aufstelleinrichtungen 2 können entlang einer wenigstens abschnittsweise geraden Linie oder entlang einer wenigstens abschnittsweise gekrümmten Linie hintereinander angeordnet sein. Zumindest Abschnitte der gekrümmten Linie können unterschiedlich stark und/oder in unterschiedliche Richtungen gekrümmt sein.

Zwei Aufstelleinrichtungen 2, die in der Seilrichtung S voneinander beabstandet sind und zwischen denen keine weitere Aufstelleinrichtung 2 angeordnet ist, sodass zwischen den zwei Aufstelleinrichtungen 2 die lichte Weite W verbleibt, können ein Haltesegment 10 bilden. Entlang der Seilrichtung S kann die Haltevorrichtung 1 mehrere Haltesegmente 10 aufwiesen. Jede der Aufstelleinrichtungen 2 kann exklusiv einem der Haltesegmente 10 zugeordnet sein.

Einem der Haltesegmente 10 zugeordnete Aufstelleinrichtungen 2 können durch das wenigstens eine Tragseil 6, 6a mit einander verbinden sein. Aufstelleinrichtungen 2 unterschiedlicher Haltesegmente 10 brauchen mit keinem Tragseil 6, 6a, miteinander verbunden zu sein, brauchen also nicht mit einem Tragseil 6, 6a miteinander verbunden sein.

Die Seilrichtung S erstreckt sich parallel zum Tragseil 6, 6a. Sind die Aufstelleinrichtungen 2 der Abfolge Z so angeordnet, dass sich die Tragseile 6, 6a der aufeinander folgenden Haltesegmente 10 unterschiedlich ausgerichtet sind, etwa weil ein Baum im Weg steht oder es das Gelände aus anderen Gründen erfordert, kann sich die Seilrichtung S von einem der Haltesegmente 10 zu einem anderen der Haltesegmente 10 ändern. Zumindest ausgewählte oder alle der auf einem der Haltesegmente 10 angeordneten Photovoltaikmodule können gemeinsam einem Wechselrichter zugeordnet und beispielsweise Solarstrom übertragen mit dem Wechselrichter verbunden sein.

Das Haltesegment 10 kann bis zu 24, bis zu 20, bis zu 16, bis zu 12, bis zu 8 oder bis zu 6 Photovoltaikmodule halten. Beispielswiese die Hälfte der auf dem Haltesegment 10 angeordneten Photovoltaikmodule kann einem Wechselrichter und die die andere Hälfte einem anderen Wechselrichter zugeordnet sein. Die Wechselrichter können an sich entlang der Seilrichtung gegenüberliegenden Enden des Haltesegmentes 10 angeordnet sein.

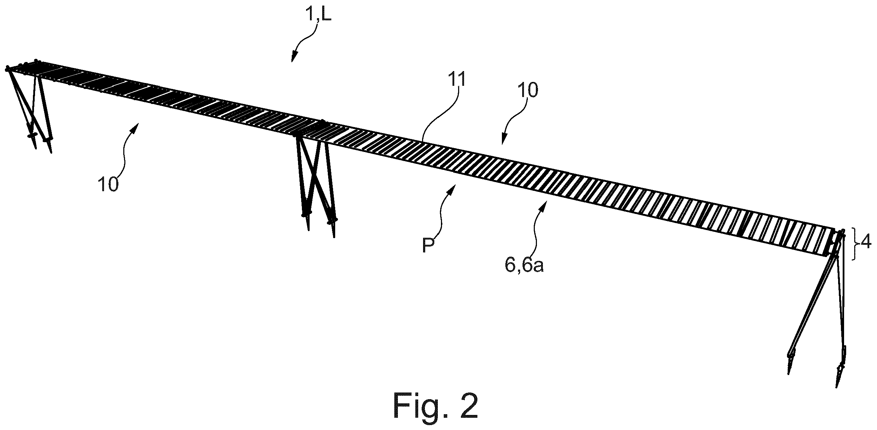

Figur 2 zeigt das Ausführungsbeispiel der Figur 1 mit Photovoltaikmodulen 11, die in ihrer Betriebsposition P angeordnet von der Haltevorrichtung 1 gehalten sind.

In der Betriebsposition P können die Photovoltaikmodule 11 im Wesentlichen senkrecht zur Schwerkraft und/oder parallel zum Untergrund ausgerichtet sein. Insbesondere können die Photovoltaikmodule 11 parallel zur Seilrichtung S angeordnet sein und womöglich auf den Tragseilen 6, 6a liegen.

Das wenigstens eine Tragseil 6, 6a kann so am oberen Montageabschnitt 4 Kraft übertragend verbunden sein, dass es zumindest die durch die Photovoltaikmodule 11 auf die Tragseil 6, 6a ausgeübte Gewichtskraft an den Montageabschnitt 4 ableitet.

Das Ausführungsbeispiel der Figur 2 kann auch als Photovoltaikanlage L bezeichnet werden, die mindestens ein Photovoltaikmodul und ferner wenigstens eine erfindungsgemäße Haltevorrichtung und/oder wenigstens eine erfindungsgemäße Modulbefestigungsvorrichtung und/oder wenigstens eine erfindungsgemäße Stangenbefestigungsvorrichtung 20 aufweisen kann.

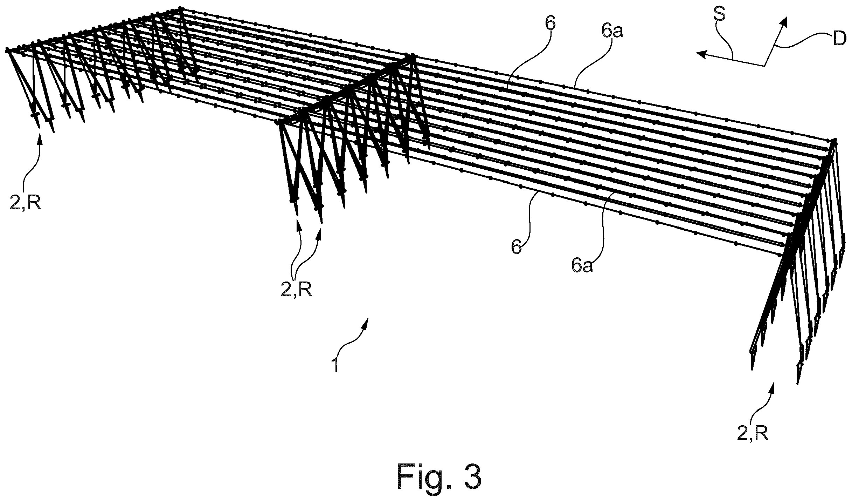

Figur 3 zeigt ein weiteres Ausführungsbeispiel der Haltevorrichtung 1 in einer schematischen Perspektivansicht. Für Elemente, die in Form oder Funktion Elementen des vorherigen Ausführungsbeispiels entsprechen, sind entsprechende Bezugszeichen verwendet. Im Folgenden wird insbesondere auf die Unterschiede zum vorherigen Ausführungsbeispiel eingegangen.

Die Haltevorrichtung 1 kann mehrere entlang einer im Wesentlichen quer zur Seilrichtung S verlaufenden Aufstellrichtung D hintereinander angeordnete Aufstelleinrichtungen 2 aufweisen. Wenigstens ausgewählte der Aufstelleinrichtungen 2 können Kraft übertragend mit zumindest einem Tragseil 6, 6a verbunden sein.

Die in der Aufstellrichtung D hintereinander angeordneten Aufstelleinrichtungen 2 können eine Anordnung R von Aufstelleinrichtungen 2 bilden, wobei die Haltevorrichtung 1 mehrere entlang der Seilrichtung S voneinander beabstandete Anordnungen R aufweisen kann.

Eine Haltevorrichtung 1 mit mehreren in der Seilrichtung S hintereinander angeordneten Anordnungen R oder mit mehreren im Wesentlichen quer zur Seilrichtung S hintereinander angeordneten Abfolgen Z kann ein Feld von Photovoltaikmodulen in ihrer Betriebsposition halten.

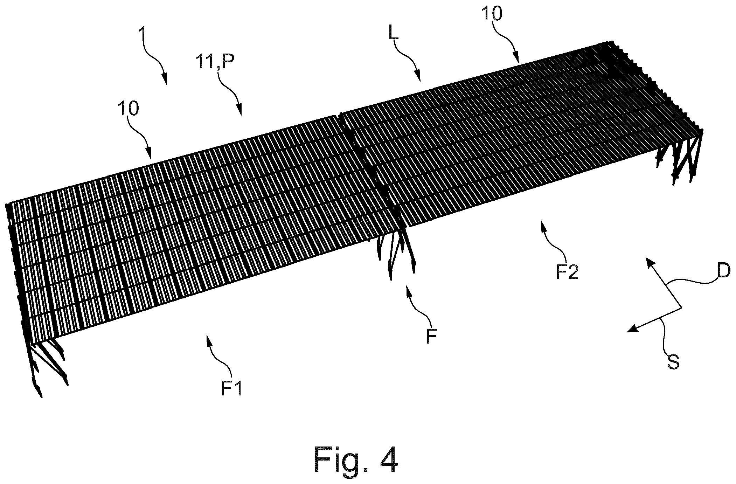

Figur 4 zeigt das Ausführungsbeispiel der Figur 3 mit Photovoltaikmodulen 11, die in ihrer Betriebsposition P angeordnet von der Haltevorrichtung 1 gehalten sind.

In der Figur 4 hält die Haltevorrichtung eine Vielzahl von Photovoltaikmodulen 11, die in dem Feld F angeordnet sind. Das Feld F von Photovoltaikmodulen 11 kann in zwei unterschiedlichen und womöglich senkrecht zueinander verlaufenden Richtungen, beispielsweise die Seilrichtung S und die Aufstellrichtung D, mehrere neben- und/oder hintereinander in ihrer Betriebsposition P angeordnete Photovoltaikmodule 11 aufweisen. Die Photovoltaikmodule 11 können hintereinander und/oder nebeneinander in ihrer jeweiligen Betriebsposition P liegend angeordnet sein. Die Photovoltaikmodule 11 können in einer Matrix mit Spalten (etwa entlang der Anordnung R) und Zeilen (etwa entlang der Abfolge Z) angeordnet sein. Wenigstens eine der Spalten kann zu einer anderen der Spalten entlang deren Spaltenrichtung verschoben sein. Wenigstens eine der Zeilen kann zu einer anderen der Zeilen entlang deren Zeilenrichtung verschoben sein.

Quer zur Seilrichtung S hintereinander angeordnete Haltesegmente 10 können Teilfelder F1, F2 bilden. Eines der Teilfelder F1 kann einem anderen Wechselrichter zugeordnet sein als ein anderes der Teilfelder F2.

Zwischen zueinander benachbarten Teilfeldern F1, F2 können Aufstelleinrichtungen 2 angeordnet sein. Entlang der Seilrichtung S kann die Haltevorrichtung 1 mehr als die zwei dargestellten Teilfelder F1, F2 und beispielsweise so viele Teilfelder F1, F2 aufweisen, wie es das Gelände ermöglicht.

Das Ausführungsbeispiel der Figur 4 kann auch als Photovoltaikanlage L bezeichnet werden, die mindestens ein Photovoltaikmodul und ferner wenigstens eine erfindungsgemäße Haltevorrichtung und/oder wenigstens eine erfindungsgemäße Modulbefestigungsvorrichtung und/oder wenigstens eine erfindungsgemäße Stangenbefestigungsvorrichtung 20 aufweisen kann.

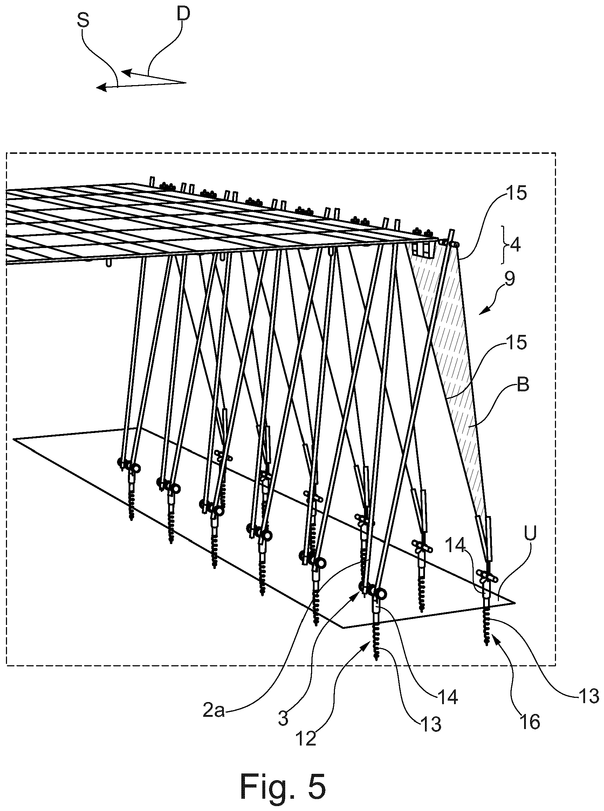

Figur 5 zeigt ein Detail des Ausführungsbeispiels der Figur 4 schematisch in einer vergrößerten Ansicht. Insbesondere zeigt Figur 5 die Abspanneinrichtung 9. Die Abspanneinrichtung 9 kann auch der in Figur 1 gezeigten Abspannvorrichtung 9 entsprechen.

Zunächst ist jedoch erneut auf die Aufstellvorrichtung eingegangen, die ebenfalls vergrößert in Figur 5 dargestellt ist und die einer der in Figur 1 gezeigten Aufstellvorrichtung entsprechen kann.

Die Aufstelleinrichtung kann eine äußere Aufstelleinrichtung 2a sein, der in oder entgegen der Seilrichtung S nur eine einzige Aufstelleinrichtung vor- oder nachgeordnet sein kann. Die äußere Aufstelleinrichtung 2a kann an einem Rand des Feldes F angeordnet sein. Die äußere Aufstelleinrichtung 2a kann in der Seilrichtung S die erste oder die letzte Aufstelleinrichtung 2a der Halteeinrichtung 1, sodass entlang der Seilrichtung S, also in und entgegen der Seilrichtung, nur eine weitere Aufstelleinrichtung 2a, 2b folgen kann.

Der untere Aufstellabschnitt 3 zumindest der äußeren Aufstelleinrichtung 2a kann einen Aufstellbodenanker 12 aufweisen. Der Aufstellbodenanker 12 kann ausgestaltet sein, um die Aufstelleinrichtung 2a unverschieblich in einem Untergrund U, auf dem die Haltevorrichtung 1 steht, zu verankern. Der Untergrund U kann ein natürlicher Untergrund sein. Der Untergrund U kann felsig, erdig, sandig oder anders sein.

Der Aufstellbodenanker 12 kann dazu ausgestaltet sein, in den Untergrund U einschraubbar oder eindrehbar zu sein und kann hierzu mit einem spitz zulaufenden Einschraubende 13 mit einem Gewinde versehen sein.

Das Einschraubende 13 und etwa dessen Gewinde kann eine Länge aufweisen, die zwischen 0,1 Meter und vier Meter und beispielsweise bis zu 0,2 Meter, 0,3 Meter, 0,4 Meter, 0,5 Meter 0,8 Meter, bis zu einem Meter, bis zu zwei Meter, bis zu 2,6 Meter oder bis zu drei Meter betragen kann. Je fester der Untergrund U ist, desto kürzer kann die Länge sein, um eine ausreichend feste Verankerung zu ermöglichen.

Der Aufstellbodenanker 12 kann aus einem Metall, beispielsweise Aluminium oder verzinkter Stahl, gefertigt sein und sogar daraus bestehen. Ein von dem spitz zulaufenden Einschraubende 13 abgewandtes Montageende 14 des Aufstellbodenankers 12 kann ein Gegenbefestigungseinrichtung, etwa eine durchgehende Gegenbefestigungsöffnung, aufweisen. Die Gegenbefestigungsöffnung kann sich quer zu einer Längs- oder Mittelachse des Montageendes 14 durch dieses erstrecken. Das Montageende 14 kann zylinder- und beispielsweise rohrförmig ausgefirmt sein.

Die Abspanneinrichtung 9 kann zumindest ein Abspannelement 15 aufweisen. Das Abspannelement 15 kann den oberen Montageabschnitt 4 einer der Haltevorrichtungen 2a Zugkraft übertragend mit dem Untergrund U, auf dem die Haltevorrichtung 1 steht, verbinden. Beispielsweise kann das Abspannelement 15 ein Seil, ein Stift, eine Stange oder ein Rohr sein.

Das Abspannelement 15 kann einen Abspannbodenanker 16 aufweisen. Der Abspannbodenanker 16 kann dem Aufstellbodenanker 13 entsprechen. Der Abspannbodenanker 16 kann entlang der Seilrichtung S von dem unteren Aufstellabschnitt 3 der zumindest einen Aufstelleinrichtung 2a entfernt angeordnet sein. Das Abspannelement 15 kann den Abspannbodenanker 16 Zugkraft übertragend mit dem oberen Montageabschnitt 4 der zumindest einen Aufstelleinrichtung 2a verbinden.

Die Abspannvorrichtung 9 kann zumindest zwei Abspannelemente 15 aufweisen.

Die Abspannelemente 15 können zwischen dem Abspannbodenanker 16 und dem oberen Montageabschnitt 4 voneinander weg verlaufend angeordnet sein. Beispielsweise können die Abspannelemente 15 vom Abspannbodenanker 16 zum oberen Montageabschnitt 4 voneinander weg verlaufend angeordnet sein. Ein Winkel zwischen den Abspannelemente 15 kann bis zu 40 °, bis zu 30 °, bis zu 25 °, bis zu 20 °, bis zu 15° oder bis zu 10 ° betragen.

Die Abspannelemente 15 können in einer gemeinsamen Ebene B angeordnet sein. Die gemeinsame Ebene B kann zur Seilrichtung S verkippt, sein. Ein Winkel zwischen der gemeinsamen Ebene E und der Seilrichtung S kann zwischen 90 ° und 180 ° und beispielswies bis zu 100 °, bis zu 110 °, bis zu 120 °, bis zu 130 °, bis zu 140 °, bis zu 150 °, bis zu 160 ° oder bis zu 170 ° betragen.

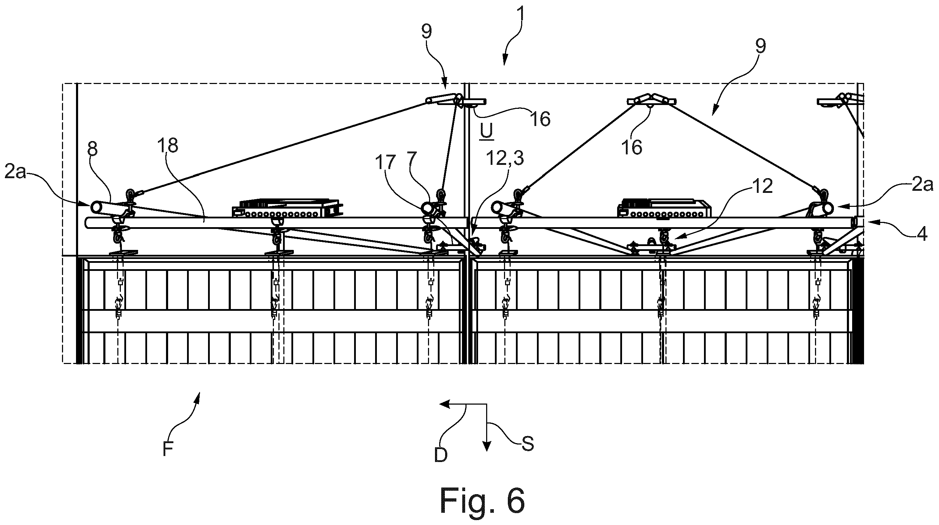

Figur 6 zeigt einen Abschnitt der Figur 5 schematisch in einer Auf- oder Draufsicht. Die Auf- oder Draufsicht der Figur 6 ist entlang der Schwerkraftrichtung und/oder senkrecht zum Untergrund U, auf dem die Halteeinrichtung 1 steht.

Wie aus der Figur 6 ersichtlich, kann der Abspannbodenanker 16 außerhalb einer Projektion des Feldes F in der Schwerkraftrichtung oder senkrecht zum Untergrund U angeordnet sein. Der Aufstellbodenanker 12 kann innerhalb der Projektion des Feldes F in der Schwerkraftrichtung oder senkrecht zum Untergrund U angeordnet sein.

Die äußere Aufstelleinrichtung 2a kann im Bereich des unteren Aufstellabschnitts 3 ein die Aufstellelemente 7, 8 miteinander verbindendes unteres Verbindungselement 17 aufweisen. Die Aufstellelemente 7, 8 können entlang des unteren Verbindungselementes 17 voneinander beabstandet am unteren Verbindungselement 17 befestigt sein.

Der Aufstellbodenanker 12 kann zwischen den Aufstellelementen 7, 8 an dem unteren Verbindungselement 17 angebracht sein. Das untere Verbindungselement 17 kann die voneinander beabstandeten Aufstellelemente 7, 8 überbrücken.

Die äußere Aufstelleinrichtung 2 kann im Bereich des oberen Montageabschnitts 4 ein die Aufstellelemente 7, 8 miteinander verbindendes oberes Verbindungselement 18 aufweisen. Die Aufstellelemente 7, 8 können entlang des oberen Verbindungselementes 18 voneinander beabstandet am oberen Verbindungselement 18 befestigt sein. Eine Länge des unteren Verbindungselementes 17 kann kleiner sein als eine Länge des oberen Verbindungselementes 18.

Das untere Verbindungselement 17 und/oder das obere Verbindungselement 18 kann starr ausgebildet sein. Beispielswiese kann das untere oder das obere Verbindungselement 17, 18 eine Stange sein. Ist die Stange hohl, kann das Verbindungselement 17, 18 auch als Rohr bezeichnet werden.

Das untere Verbindungselement 17 und/oder das obere Verbindungselement 18 kann aus einem Metall und beispielsweise auf Aluminium oder verzinktem Stahl gefertigt sein oder daraus bestehen.

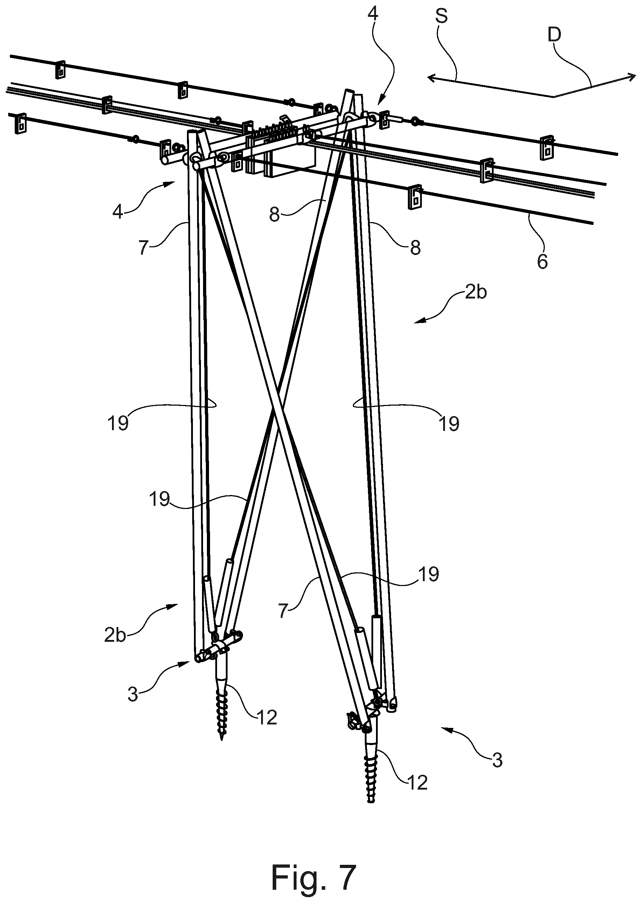

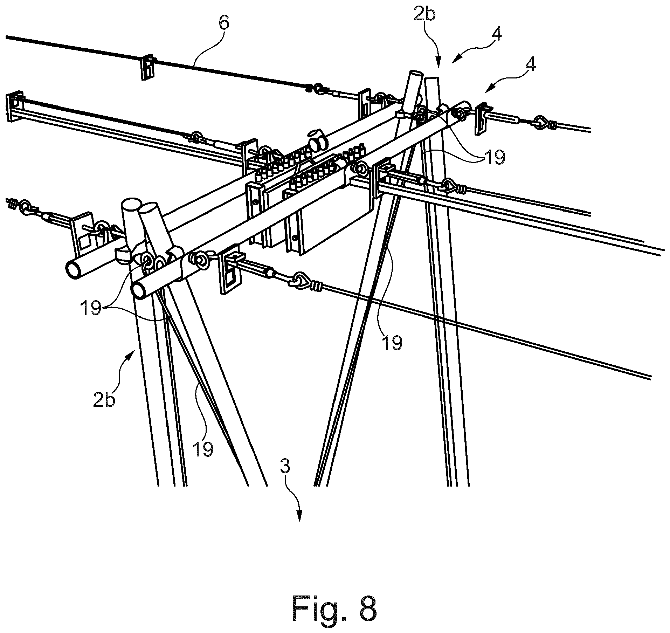

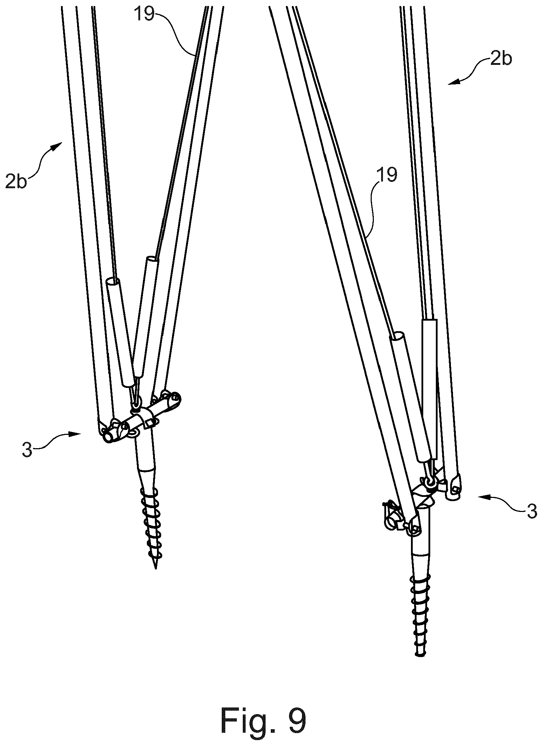

Figuren 7 bis 9 zeigen einen weiteren Abschnitt der Haltevorrichtung 1 der Figur 1 oder der Figur 3 schematisch in einer Perspektivansicht, wobei Figuren 8 und 9 jeweils Detailansichten der Figur 7 sind. Insbesondre sind innere Aufstelleinrichtungen 2b der Haltevorrichtung 1 vergrößert gezeigt.

Die Haltevorrichtung 1 kann zumindest ein Verspannelement 19 aufweisen, mit dem eine der inneren Aufstelleinrichtungen 2b verspannt ist. Insbesondere kann das Verspannelement 19 eine der inneren Aufstelleinrichtungen 2b mit einer anderen der inneren Aufstelleinrichtungen 2b Zugkraft übertragend verbinden.

Die beiden mit dem Verspannelement 19 Zugkraft übertragend miteinander verbundenen inneren Aufstelleinrichtungen 2b können entlang der Seilrichtung S unmittelbar nacheinander auf dem Untergrund angeordnet sein. Die inneren Aufstelleinrichtungen 2b, die mit dem Verspannelement 19 Zugkraft übertragend miteinander verbundenen sind, können frei von einer Verbindung durch irgendein Tragseil 6, 6a miteinander sein. Daher brauchen die inneren Aufstelleinrichtungen 2b nicht durch ein Tragseil 6, 6a miteinander verbunden sein.

Die inneren Aufstelleinrichtungen 2b, die mit dem Verspannelement 19 Zugkraft übertragend miteinander verbundenen sind, können kontaktlos zueinander sein; die inneren Aufstelleinrichtungen 2b, die mit dem Verspannelement 19 Zugkraft übertragend miteinander verbundenen sind, können einander nicht kontaktieren.

Die Aufstellelemente 7, 8 jeder der inneren Aufstelleinrichtungen 2b, die mit dem Verspannelement 19 Zugkraft übertragend miteinander verbundenen sind, können gemeinsame Ebenen bilden, die in der Figur 7 der Übersichtlichkeit halber nicht wie in der Figur 1 durch Strichlinien angedeutet sind, jedoch der gemeinsamen Ebene E der Figur 1 insofern entsprechen können, also dass diese durch die Aufstellelemente 7, 8 aufgespannt ist.

Die gemeinsame Ebene einer der inneren Aufstelleinrichtungen 2b kann unter einem Winkel zu der gemeinsamen Ebene der anderen der inneren Aufstelleinrichtungen 2b verlaufen, wobei der Winkel zwischen 0 ° und 180 ° und beispielswiese bis zu 10°, bis zu 20 °, bis zu 30 °, bis zu 40 ° bis zu 50 °, bis zu 60 °, bis zu 70 °, bis zu 80 °, bis zu 90 °, bis zu 120 ° oder bis zu 150 ° betragen.

Das Verspannelement 19 kann den oberen Montageabschnitt 4 einer der inneren Aufstelleinrichtungen 2b Zugkraft übertragend mit dem unteren Aufstellabschnitt 3 der anderen der inneren Aufstelleinrichtungen 2b verbinden.

Das Verspannelement 19 kann den oberen Montageabschnitt 4 einer der inneren Aufstelleinrichtungen 2b einer der Anordnungen R von Aufstelleinrichtungen 2 mit einem unteren Aufstellabschnitt 3 einer der inneren Aufstelleinrichtungen 2b einer anderen der Anordnungen R von Aufstelleinrichtungen R Zugkraft übertragend verbinden.

Auf innere Aufstelleinrichtungen 2b entlang der Seilrichtung S einwirkende mechanische Lasten können zumindest teilweise an andere innere Aufstelleinrichtungen 2b abgeleitet werden, wobei diese Lasten insbesondere vom jeweiligen unteren Aufstellabschnitt 3 aufgenommen und von dort über den Aufstellbodenanker 12 in den Untergrund geleitet werden können, was die Stabilität der Haltevorrichtung 1 erhöhen kann.

Es können mehrere Verspannelemente 19 vorgesehen sein, wobei zwei am oberen Montageabschnitt 4 einer der inneren Aufstelleinrichtungen angebrachte Verspannelemente 19 am oberen Montageabschnitt 4 quer zur Seilrichtung S einen größeren Abstand zueinander aufweisen können als am unteren Aufstellabschnitt 3.

Anschlagmittel, etwa Anbringpunkte oder Anschlagpunkte, an denen die Verspannelemente 19 am Montageende 4 angebracht oder angeschlagen sind, können mit Anschlagmittel, etwa Anbringpunkte oder Anschlagpunkte, für die Tragseile 6, 6a entlang der Seilrichtung S ausgerichtet sein und beispielswiese fluchten. Am unteren Aufstellabschnitt 3 können zwei der Verspannelemente 19 an einem gemeinsamen Anschlagmittel, etwa ein Anbringpunkt oder ein Anschlagpunkt, angebracht oder angeschlagen sein.

Das wenigstens eine Verspannelement 19 kann ein Verspannseil sein. Das Verspannseil kann ein aus einem Metall gefertigt und beispielsweise ein Stahl- oder Drahtseil sein. Das Verspannseil kann ein Kunststoffseil oder ein Karbonseil sein. Das Verspannseil kann unterschiedliche Materialien aufweisen. Das Verspannseil kann ein statisches Seil sein. Alternativ kann das wenigstens eine Verspannelement 19 ein Stift, eine Stange oder ein Rohr sein.

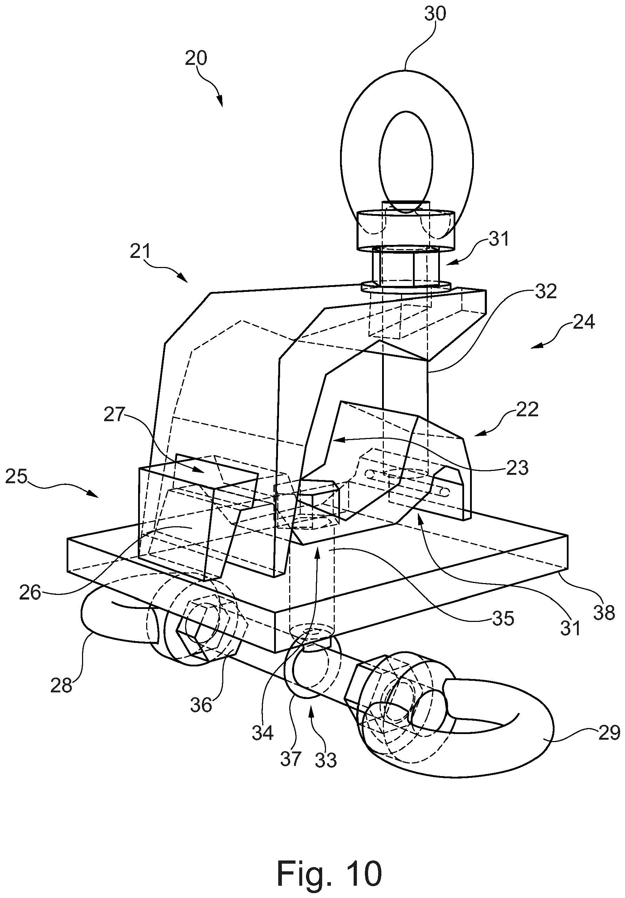

Figur 10 zeigt ein erstes Ausführungsbeispiels einer an einer Stange befestigbaren Stangenbefestigungsvorrichtung 20.

Die Stangenbefestigungsvorrichtung 20 weist zwei Befestigungsteilen 21, 22 auf. Die Befestigungsteile 21, 22 umgreifen in einem aneinander montierten Zustand eine Stangendurchgangsöffnung 23. Die Befestigungsteile 21, 22 sind ausgebildet, an einer Seite 24 der Stangendurchgangsöffnung 23 wiederholt lösbar aneinander befestigbar zu sein. An einer der einen Seite 24 gegenüberliegenden anderen Seite 25 weist eines der Befestigungsteile 22 einen Befestigungsvorsprung 26 auf. Das andere der Befestigungsteile 21 weist an der anderen Seite 24 eine Aufnahme 27 für den Befestigungsvorsprung auf.

Die Stangenbefestigungsvorrichtung 23 kann also zweiteilig ausgebildet sein, wobei die beiden Befestigungsteile 21, 22 im unmontierten Zustand unabhängig voneinander handhabbar sein können.

Stangen, etwa Stäbe oder Rohre, an denen die Stangenbefestigungsvorrichtung 20 befestigbar ist, können tragende oder starre Teile der Aufstelleinrichtung 2 der Haltevorrichtung 2 für Photovoltaikmodule bereitstellen. Die tragenden oder starren Teile können Aufstellelemente7, 8, untere Verbindungselemente 17, obere Verbindungselemente 18 und/oder sonstige tragende oder starre Teile der Haltevorrichtung 2 und insbesondere der Aufstelleinrichtung 2 sein.

Die Stangenbefestigungsvorrichtung 20 kann funktionale Elemente, insbesondere Anschlagmittel 28, 29, 30, etwa Anbringpunkte oder Anschlagpunkte, zum Beispiel zum Anbringen oder Anschlagen eines Tragelementes, beispielsweise eines der Tragseil 6, 6a, mindestens eines der Abspannelemente 15 und/oder zumindest eines der Verspannelemente 19, aufweisen, die somit einfach an diesen Stangen befestigt werden können.

Die Befestigungsteile 21, 22 können an der einen Seite 24 jeweils eine Befestigungsöffnung 31 zur Aufnahme einer Befestigungsstange 32 aufweisen. Die Befestigungsöffnungen 31 können im dargestellten aneinander montierten Zustand der Stangenbefestigungsvorrichtung 20 miteinander Fluchten. Die Befestigungsstange 32 kann einen Schraubabschnitt mit einem Außengewinde aufweisen. Eine der Befestigungsöffnungen 31 und beispielsweise die Befestigungsöffnung 31 des Befestigungsteils 22 kann ein Innengewinde aufweisen. Alternativ kann die Befestigungsstange 32 in einer der Befestigungsöffnungen 31 und beispielsweise die Befestigungsöffnung 31 des Befestigungsteils 22 unverschiebbar und schwenkbar aufgenommen sein.

Eine der Befestigungsöffnungen 31 und beispielswiese die Befestigungsöffnung 31 des Befestigungsteils 21 kann ein sich tangential zur Stangendurchgangsöffnung 23 öffnende Einsetzschlitz sein. Die Befestigungsstange 32 brauch dann nicht durch zwei Befestigungsöffnungen 31 gefädelt zu werden, sondern kann in eine der Befestigungsöffnungen 31 einsteckbar oder einschraubbar und in den Einsetzschlitz einsetzbar oder einschwenkbar sein. Die Befestigungsstange 32 kann eines der Anschlagmittel 30 aufweisen. Insbesondere kann das Anschlagmittel 30 an einem von Befestigungsteil 22 weg weisenden Ende der Befestigungsstange 32 angeordnet sein.

Die Stangenbefestigungsvorrichtung 20 kann ein Befestigungsmittel 33 zur Befestigung der Stangenbefestigungsvorrichtung 20 an einem weiteren Element, beispielsweise einem Aufstellbodenanker, einem Abspannbodenanker einer Haltevorrichtung für Photovoltaikmodule oder einer anderen Stangenbefestigungsvorrichtung, aufweisen. Das Befestigungsmittel 33 kann am Befestigungsteil 22 befestigt oder befestigbar sein und sich von Befestigungsteil 21 weg erstrecken. Beispielsweise kann das Befestigungsteil 22 eine Befestigungsaufnahme 34 aufweisen, in der ein Befestigungsstift 35 des Befestigungsmittel 33 befestigt oder befestigbar und beispielswiese verschraubt ist.

Beabstandet vom Befestigungsteil 22 kann das Befestigungsmittel 33 eine Befestigungsachse 36 aufweisen. Der Befestigungsstift 35 kann einen Befestigungsring 37 aufweisen, durch den sich die Befestigungsachse 36 erstreckt. Der Befestigungsring 37 kann drehbar am Befestigungsstift 35 befestigt sein. Die Befestigungsachse 36 kann sich drehbar und/oder entlang ihrer Längsrichtung verschiebbar durch den Befestigungsring 37 erstrecken.

Der Befestigungsstift 35 und die Befestigungsachse 37 können einen Befestigungsanker formen. Der Befestigungsanker kann stockankerförmig oder T-förmig ausgestaltet sein. Der Befestigungsstift 35 kann den Ankerschaft und die Befestigungsachse 37 kann die Ankerarme des Befestigungsankers darstellen.

An einander gegenüberliegenden Abschnitten der Befestigungsachse 37 kann das Befestigungsmittel 33 die Anschlagmittel 28, 29, etwa Anbringpunkte/Anschlagpunkte, aufweisen. Der Befestigungsring 37 kann zwischen den Anschlagmitteln 28, 29 angeordnet sein.

Das Befestigungsteil 22 kann an einer Montageplatte 38 angebracht sein. Das Befestigungsteil 22 kann zwischen der Montageplatte 38 und dem Befestigungsteil 21 angeordnet sein. Die Montageplatte 38 kann zwischen dem Befestigungsteil 22 und der Befestigungsachse 36 angeordnet sein. Der Befestigungsstift 35 kann sich durch die Montageplatte 38 erstrecken.

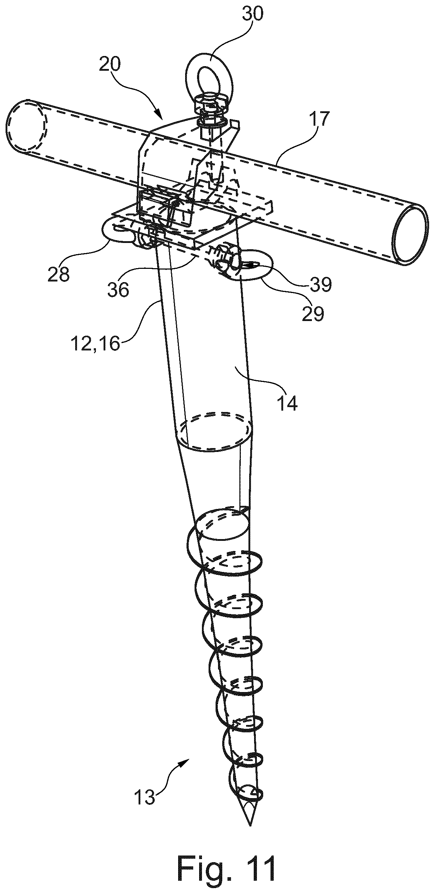

Figur 11 zeigt schematisch einen Bodenanker, der als Aufstellbodenanker 12 oder als Anspannbodenanker 16 verwendet werden kann, zusammen mit einer Stange, etwa ein unteres Verbindungselement 17, das mit der Stangenbefestigungsvorrichtung 20 der Figur 10 am Bodenanker befestigt ist. Die beiden Befestigungsteile 21, 22 der Stangenbefestigungsvorrichtung 20 können in ihrem montierten Zustand die Stange umgreifen.

Das Montageende 14 des Bodenankers kann eine Gegenbefestigungsöffnung 39 aufweisen, die sich quer zur Längsachse und womöglich durch die Mittelachse des Montageendes 14 durch das Montageende 14 erstrecken. Die Befestigungsachse 36 kann in die Gegenbefestigungsöffnung 39 einschiebbar sein.

Das Montageende 14 kann wenigstens abschnittsweise hohl und beispielsweise rohrförmig ausgeformt sein. Insbesondere kann sich das Montageende 14 weg vom Einschraubende 13 öffnen. Somit kann der Befestigungsstift 35 in das Montageende 14 einsetzbar sein, bis der Befestigungsring 37 mit der Gegenbefestigungsöffnung 39 fluchtet. Die Befestigungsachse 36 kann in die Gegenbefestigungsöffnung 39 sowie in den Befestigungsring 39 einschiebbar sein.

Zumindest eines der Anschlagmittel 28, 29 kann an der Befestigungsachse 36 anbringbar und beispielswiese anschraubbar sein, nachdem die Befestigungsachse 36 in die Gegenbefestigungsöffnung 39 eingesetzt wurde.

Zumindest ausgewählte der Anschlagmittel können beispielsweise als ein Anschlagring, eine Anschlagöse oder einen Anschlaghaken ausgebildet sein. Tragelemente, beispielswiese die Tragseile 6, 6a, die Verspannelemente 19 oder Abspannelemente 15 können einfach an der Stangenbefestigungsvorrichtung 20 angeschlagen werden, etwa diese Gegenanschlagmittel, zum Beispiel Anschlaghaken, Anschlagringe oder Anschlagösen aufweisen.

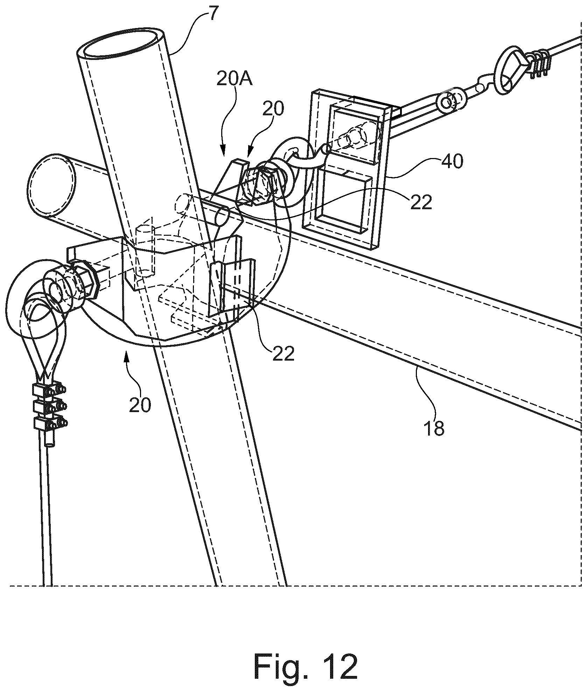

Figur 12 zeigt ein erstes Ausführungsbeispiel einer Stangenverbindungsvorrichtung 20A in einer schematischen Perspektivansicht.

Die Stangenverbindungsvorrichtung 20A kann an zwei Stangen oder Rohren gleichzeitig befestigbar sein. Hierzu kann die Stangenverbindungsvorrichtung 20A zwei Stangenbefestigungsvorrichtungen 20 aufweisen, wobei einer der Stangenbefestigungsvorrichtung 20 anstelle an der Montageplatte 38 an einer weiteren Stangenbefestigungsvorrichtung 20 angebracht sein kann. Insbesondere die Befestigungsteile 22 können an einander befestigt oder befestigbar sein. Beispielsweise können die Befestigungsteile 22 miteinander verschweißt, verlötet oder verklebt sein. Alternativ können die Befestigungsteile 22 beide jeweils eine Befestigungsaufnahme 34 aufweisen, wobei beide Befestigungsaufnahme 34 durch einen Niet oder eine Schraube in den Befestigungsaufnahmen 34 aneinander befestigt oder befestigbar sein können.

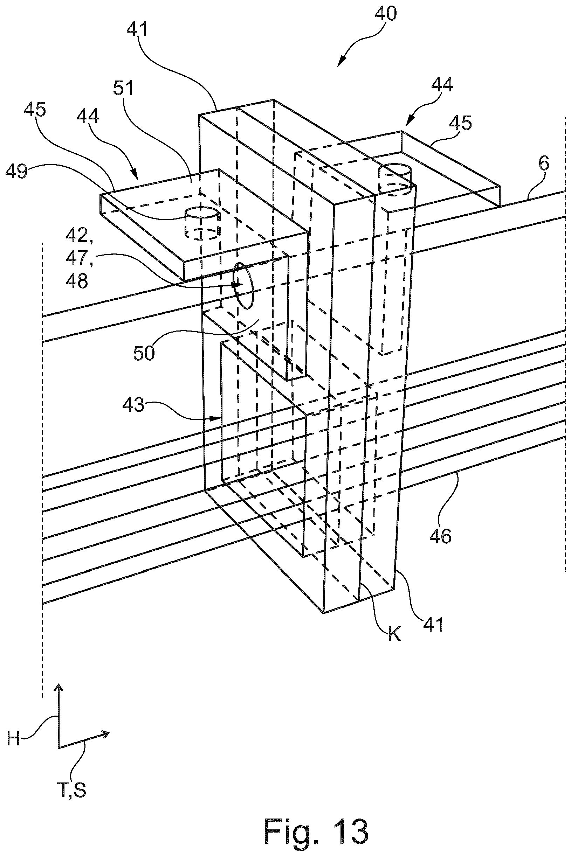

Ferner zeigt Figur 12 ein Ausführungsbeispiel einer Modulbefestigungsvorrichtung 40. Dieses sowie ein weiteres Ausführungsbeispiel der Modulbefestigungsvorrichtung 40 sind im Folgenden mit Bezug auf Figur 13 beschrieben.

Die Modulbefestigungsvorrichtung 40 weist ein Basiselement 41 auf. Das Basiselement 41 weist zwei voneinander abgewandte Seiten auf.

Ferner weist das Basiselement 41 zwei sich zwischen diesen Seiten erstreckende und in einer Höhenrichtung H des Basiselementes 41 voneinander beabstandete Durchgangsöffnungen 42, 43 auf. Ferner weist die Modulbefestigungsvorrichtung 40 ein Befestigungselement 44 auf. Das Befestigungselement 44 ist an einer der Seiten des Basiselementes 41 angeordnet und beispielsweise befestigt. Das Befestigungselement 44 weist einen vom Basiselementes 41 weg vorspringen Befestigungsvorsprung 45 auf, der ausgestaltet ist, um am Photovoltaikmodul befestigt zu werden.

Dadurch, dass das Basiselement 41 zwei Durchgangsöffnungen 42, 43 aufweist, kann die Modulbefestigungsvorrichtung 40 einfach in eine Haltevorrichtung 1 integriert werden. So kann sich durch eine der Durchgangsöffnungen 42 ein Tragelement, etwa ein Stahlträger oder ein Tragseil 6, 6a, erstrecken. Durch die andere der Durchgangsöffnungen 43 können Anschlussleitungen 46, etwa Energieleitungen und/oder Datenleitungen, verlaufen. Die Modulbefestigungsvorrichtung 40 ist folglich besonders einfach und daher kostengünstig zu montieren.

Das Befestigungselement 44 kann parallel zu der Seite, an der das Befestigungselement 44 angebracht ist, beabstandet von der Durchgangsöffnung 43 angeordnet sein. Das Befestigungselement 44 kann eine Führungsöffnung 47 aufweisen, die mit der Durchgangsöffnung 42 eine durchgehende Öffnung 48 bildet. Das Befestigungselement 44 kann überlappungsfrei mit der Durchgangsöffnung 43 angeordnet sein. Überlappungsfrei kann bedeuten, dass eine Projektion der Durchgangsöffnung 43 entlang einer Richtung T, entlang sich die Durchgangsöffnung 43 durch das Basiselement 44 erstreckt, nicht durch das Befestigungselement 44 verläuft.

Das Befestigungselement 44 kann so angeordnet sein, dass es nicht in die Durchgangsöffnung 43 ragt. Die Höhenrichtung H kann im montierten Zustand der Modulbefestigungsvorrichtung 40 im Wesentlichen entgegen der Schwerkraftrichtung und/oder im Wesentlichen senkrecht zum Untergrund und weg davon weisend verlaufen. Entlang der Richtung T kann eine Dicke des Basiselementes 41 verlaufen, sodass die Richtung T auch als Dickenrichtung bezeichnet werden kann. Im montierten Zustand der Modulbefestigungsvorrichtung 40 kann die Richtung T im Wesentlichen der Seilrichtung S entsprechen.

Im dargestellten montierten Zustand der Modulbefestigungsvorrichtung 40 kann ein Tragelement für ein Photovoltaikmodul, etwa eines der Tragseile 6, 6a, durch die durchgehende Öffnung 48 verlaufen. Das Tragelement kann ein Photovoltaikmodul am Befestigungselement 40 positionieren, wodurch sich das Befestigen des Photovoltaikmoduls am Befestigungselement 40 vereinfachen kann.

Die Modulbefestigungsvorrichtung 40 kann in ihrem montierten Zustand entlang einer Längsrichtung des Tragelementes, etwa entlang der Seilrichtung S, auf dem Tragelement verschiebbar sein. Das Photovoltaikmodul kann also noch einfacher zu montieren sein.

Die Modulbefestigungsvorrichtung 40 kann in ihrem montierten Zustand und in einem an wenigstens einem Photovoltaikmodul befestigten Zustand entlang einer Längsrichtung des Tragelementes, etwa die Seilrichtung S, auf dem Tragelement verschiebbar sein, sodass thermische Längenänderungen des Tragelementes, die sich von thermische Längenänderungen des an der Modulbefestigungsvorrichtung 40 befestigten Photovoltaikmoduls unterscheiden können, nicht zu das Photovoltaikmodul womöglich beschädigenden mechanischen Spannungen führen.

Die durchgehende Öffnung 48 kann im montierten Zustand der Modulbefestigungsvorrichtung 40 in der Höhenrichtung H hinter der Durchgangsöffnung 43 angeordnet sein. Leitungen 46, die durch die Durchgangsöffnung 43 verlaufen und von dieser getragen werden können, können in der Schwerkraftrichtung vor dem an der Modulbefestigungsvorrichtung 40 befestigten Photovoltaikmodul angeordnet sein und das Photovoltaikmodul somit weniger verschatten und/oder die Lage des Photovoltaikmoduls stabilisieren.

Die Schwerkraftrichtung kann entgegen der Höhenrichtung H verlaufen. Die Durchgangsöffnung 43 kann als untere Durchgangsöffnung oder Leitungsdurchgangsöffnung bezeichnet werden. Die Durchgangsöffnung 42 kann als obere Durchgangsöffnung oder Tragelementdurchgangsöffnung bezeichnet werden.

Der Befestigungsvorsprung 45 kann eine Befestigungsstruktur 49 zur Befestigung eines Photovoltaikmoduls an der Modulbefestigungsvorrichtung 40 aufweisen. Die Befestigungsstruktur 49 kann parallel zu der Seite, an der das Befestigungselement 44 angeordnet ist, verlaufen.

Die Befestigungsstruktur 49 kann eine Befestigungsöffnung oder ein Befestigungsstift sein. Ist die Befestigungsstruktur 49 eine Befestigungsöffnung, so kann ein Photovoltaikmodul mithilfe einer Schraube, die durch die Befestigungsöffnung und das Photovoltaikmodul schraubbar sein kann, befestigt werden. Die Befestigungsöffnung kann ein Gewinde, etwa ein Innengewinde, für die Schraube aufweisen. Alternativ kann das Photovoltaikmodul ein Gewinde, etwa ein Innengewinde, für die Schraube aufweisen. Alternativ kann das Photovoltaikmodul mit einer auf die Schraube aufgeschraubten Gegenschraube, beispielsweise eine Mutter oder eine Flügelschraube, fixiert werden.

Das Photovoltaikmodul kann einen Befestigungsstift aufweisen, der in die Befestigungsöffnung einsetzbar ist. Das Photovoltaikmodul kann durch die Befestigungsöffnung und den Befestigungsstift einfach positionierbar sein. Weist der Befestigungsstift ein Gewinde und insbesondere ein Außengewinde auf, kann das Photovoltaikmodul mit einer auf den Befestigungsstift aufgeschraubten Gegenschraube, beispielsweise eine Mutter oder eine Flügelschraube, fixiert werden.

Ist die Befestigungsstruktur 49 ein Befestigungsstift, so kann sich dieser in der Höhenrichtung H weg vom Befestigungsvorsprung 45 erstrecken. Der Befestigungsstift kann sich weg von der einen Durchgangsöffnung 43 und/oder parallel zu der Seite, an der das Befestigungselement 44 angeordnet ist, erstrecken. Weist das Photovoltaikmodul eine Aufnahme für den Befestigungsstift auf, kann diese den Befestigungsstift aufnehmen. Der Befestigungsstift kann das Photovoltaikmodul positionieren. Der Befestigungsstift kann mit einem Gewinde und beispielsweise einem Außengewinde versehen sein. Das Photovoltaikmodul kann mit einer auf den Befestigungsstift aufgeschraubten Gegenschraube, beispielsweise eine Mutter oder eine Flügelschraube, fixiert werden.

Ein Vorteil dieser Ausführungsbeispiele kann sein, dass Photovoltaikmodule besonders effizient und daher mit geringem Aufwand an der Modulbefestigungsvorrichtung 40 befestigbar sind. Optional können Photovoltaikmodule durch den Befestigungsstift 40 sogar relativ zur Modulbefestigungsvorrichtung 40 positioniert werden.

Das Befestigungselement 44 kann ein Winkelblech sein. Ein Schenkel 50 des Winkelblechs, mit dem das Befestigungselement 44 am Basiselement 41 angeordnet ist, kann die Führungsöffnung 47 aufweisen Der andere Schenkel 51 kann die Befestigungsstruktur 49 aufweisen.

Die Modulbefestigungsvorrichtung 40 kann ein weiteres Befestigungselement 44 mit einem Befestigungsvorsprung 45 aufweisen, das an der anderen der einander gegenüberliegenden Seiten angeordnet ist. Insbesondere kann die Modulbefestigungsvorrichtung 40 spiegelsymmetrisch ausgebildet sein. Die Symmetrieebene K der spiegelsymmetrischen Modulbefestigungsvorrichtung 40 kann parallel zu der Seite oder zu den Seiten, an der oder an denen das Befestigungselement oder die Befestigungselemente 44 angeordnet sind, verlaufen.

Beispielsweise kann die in der Figur 13 gezeigte Modulbefestigungsvorrichtung 40 zwei der in Figur 12 dargestellten Modulbefestigungsvorrichtungen 40 aufweisen, sodass die Modulbefestigungsvorrichtung 40 zwei Basiselemente 41 aufweisen kann. Die beiden Basiselemente 41 können an einer Ebene, die die Symmetrieebene K sein kann, aneinander anliegend angeordnet und/oder befestigt sein.

Mit einer zwei Befestigungselemente 44 aufweisenden Modulbefestigungsvorrichtung 40 können zwei Photovoltaikmodule, die in der Seilrichtung S hintereinander angeordnet sind, befestigt werden. Eine zwischen den gegenüberliegenden Seiten des Basiselementes 41/der Basiselemente 41 verlaufende Dicke kann den Abstand zwischen mit der Modulbefestigungsvorrichtung 40 aneinander befestigten Photovoltaikmodulen vorgeben.

Die Dicke kann bei der Planung der Freilandanlage so gewählt werden, dass mehr Photovoltaikmodulen pro Fläche anbringbar sind - bei geringerer Dicke - oder mehr Sonnenlicht an den zwischen den mit der Modulbefestigungsvorrichtung aneinander befestigten Photovoltaikmodulen scheint - bei größerer Dicke.

Eine größere Dicke kann vorteilhaft sein, wenn die Modulbefestigungsvorrichtung mit einer auf einem landwirtschaftlich bewirtschafteten Untergrund aufgestellt ist, sodass Pflanzen ausreichend Licht erhalten. Ferner kann eine größere Dicke kann vorteilhaft sein, wenn bifaziale Photovoltaikmodule verwendet werden, da bei einem größeren Abstand zwischen den bifazialen Photovoltaikmodulen mehr Licht auf den Untergrund treffen und von diesem zur zusätzlichen Energiewandlung auf die aktive Rückseite der bifazialen Photovoltaikmodule reflektiert werden kann.

Alternativ kann die Dicke durch Hinzufügen oder Weglassen von Basiselementen 41 flexibel änderbar sein.

Die Befestigungsvorsprünge 45 können sich in entgegengesetzte Richtungen erstrecken.

Das Basiselement 41 kann die Form eines Quaders oder die Form einer Platte haben. Das Basiselement 41 kann beispielsweise aus einem Metall (zum Beispiel aufweisend verzinkter Stahl oder Aluminium), einem Kunststoff, einem Kompositmaterial oder aus Gummi gefertigt sein.

Gemäß einem weiteren Ausführungsbeispiel kann die Haltevorrichtung 1 die Modulbefestigungsvorrichtung 40 und/oder die erfindungsgemäße Stangenbefestigungsvorrichtung 20 aufweisen.

Gemäß eines weiteren Ausführungsbeispiels kann an der Haltevorrichtung 1 eine Vielzahl von Photovoltaikmodulen 11 angeordnet oder fixiert sein, die insbesondere mit mehreren der Modulbefestigungsvorrichtungen 40 an den Tragseilen 6, 6a angebracht sein können. Eine Haltevorrichtung 1 mit einer Photovoltaikmodulen 11 kann insbesondere eine Photovoltaikanlage L bilden.

### BEZUGSZEICHENLSTE

- 1: Haltevorrichtung
- 2: Aufstelleinrichtung
- 2a: äußere Aufstelleinrichtung
- 2b: innere Aufstelleinrichtung
- 3: unterer Aufstellabschnitt
- 4: oberer Montageabschnitt
- 5: Trageeinrichtung
- 6, 6a: Tragseil
- 7, 8: Aufstellelemente
- 9: Abspanneinrichtung
- 10: Haltesegment
- 11: Photovoltaikmodule
- 12: Aufstellbodenanker
- 13: Einschraubende
- 14: Montageende
- 15: Abspannelement
- 16: Abspannbodenanker
- 17: unteres Verbindungselement
- 18: oberes Verbindungselement
- 19: Verspannelement
- 20: Stangenbefestigungsvorrichtung
- 20A: Stangenverbindungsvorrichtung
- 21, 22: Befestigungsteile
- 23: Stangendurchgangsöffnung
- 24, 25: Seiten
- 26: Befestigungsvorsprung
- 27: Aufnahme für Befestigungsvorsprung
- 28, 29, 30: Anschlagmittel
- 31: Befestigungsöffnung
- 32: Befestigungsstange
- 33: Befestigungsmittels
- 34: Befestigungsaufnahme
- 35: Befestigungsstift
- 36: Befestigungsachse
- 37: Befestigungsring
- 38: Montageplatte
- 39: Gegenbefestigungselement/Gegenbefestigungsöffnung
- 40: Modulbefestigungsvorrichtung
- 41: Basiselement
- 42, 43: Durchgangsöffnung
- 44: Befestigungselement
- 45: Befestigungsvorsprung
- 46: Anschlussleitungen
- 47: Führungsöffnung
- 48: durchgehende Öffnung
- 49: Befestigungsstruktur
- 50, 51: Schenkel

- A: Tragabschnitt
- B: Ebene
- D: Aufstellrichtung
- E: gemeinsame Ebene
- F: Feld
- F1, F2: Teilfeld
- H: Höhenrichtung
- K: Symmetrieebene
- L: Photovoltaikanlage
- P: Betriebsposition
- R: Anordnung
- S: Seilrichtung
- T: Dickenrichtung
- U: Untergrund
- W: lichte Weite
- Z: Abfolge

## Patentansprüche

1. Haltevorrichtung (1), insbesondere zum Halten mindestens eines Photovoltaikmoduls (11), mit zumindest einer Aufstelleinrichtung (2) zum Aufstellen auf einem Untergrund (U) und mit zumindest einer Trageeinrichtung, die ausgebildet ist, mindestens ein Photovoltaikmodul (11) in seiner Betriebsposition (P) zu tragen, wobei die zumindest eine Trageeinrichtung wenigstens ein sich in einer Seilrichtung (S) erstreckendes Tragseil (6) zum Tragen mindestens eines Photovoltaikmoduls aufweist und wobei das wenigstens eine Tragseil (6) mit der Aufstelleinrichtung (2) Kraft übertragend dazu verbunden ist, zumindest die durch mindestens eine Photovoltaikmodul (11) auf das Tragseil (6) ausgeübte Gewichtskraft auf die Aufstelleinrichtung (2) abzuleiten.

2. Haltevorrichtung (1) nach Anspruch 1, **dadurch gekennzeichnet, dass** die Aufstelleinrichtung (2) einen unteren Aufstellabschnitt (3) und einen dem unteren Aufstellabschnitt (3) gegenüberliegend angeordneten oberen Montageabschnitt (4) aufweist, wobei das wenigstens eine Tragseil (6) mit dem oberen Montageabschnitt (4) Kraft übertragend dazu verbunden ist, zumindest die durch mindestens ein Photovoltaikmodul (11) auf das Tragseil (6) ausgeübte Gewichtskraft an den oberen Montageabschnitt (4) abzuleiten.

3. Haltevorrichtung (1) nach Anspruch 1 oder 2, **dadurch gekennzeichnet, dass** die Trageeinrichtung wenigstens zwei Tragseile (6, 6a) zum Tragen mindestens eines Photovoltaikmoduls (11) aufweist, wobei die Tragseile (6, 6a) eine Tragabschnitt (A) für mindestens ein Photovoltaikmodul (11) bereitstellen.

4. Haltevorrichtung (1) nach einem der Ansprüche 1 bis 3, **dadurch gekennzeichnet, dass** die Aufstelleinrichtung (2) zwei Aufstellelemente (7, 8) aufweist, die zwischen dem unteren Aufstellabschnitt (3) und dem oberen Montageabschnitt (4) voneinander weg verlaufend angeordnet sind.

5. Haltevorrichtung (1) nach Anspruch 4, **dadurch gekennzeichnet, dass** die Aufstelleinrichtung (2) im Bereich des unteren Aufstellabschnitts (3) ein die Aufstellelemente (7, 8) miteinander verbindendes unteres Verbindungselement (17) aufweist.

6. Haltevorrichtung (1) nach Anspruch 4 oder 5, **dadurch gekennzeichnet, dass** die Aufstellelemente (7, 8) in einer gemeinsamen Ebene (E) angeordnet sind, wobei die gemeinsame Ebene (E) einen Winkel zwischen 45 ° und 120 ° zum Tragseil (6) aufweist.

7. Haltevorrichtung (1) nach einem der Ansprüche 1 bis 6, **dadurch gekennzeichnet, dass** die Haltevorrichtung (1) zwei entlang der Seilrichtung (S) hintereinander angeordnete Aufstelleinrichtungen (2b) und mindestens ein Verspannelement (19) aufweist, wobei das Verspannelement (19) den oberen Montageabschnitt (4) einer der Aufstelleinrichtungen (2b) Kraft übertragend mit dem unteren Aufstellabschnitt (3) der anderen der Aufstelleinrichtungen (2b) verbindet.

8. Haltevorrichtung (1) nach Anspruch 7, **dadurch gekennzeichnet, dass** die Aufstellelemente (7, 8) jeder der zwei hintereinander angeordneten Aufstelleinrichtungen (2b) eine gemeinsame Ebene aufspannen, wobei die gemeinsamen Ebenen bevorzugt unter einem Winkel zwischen 0 ° und 180 ° zueinander verlaufen.

9. Haltevorrichtung (1) nach einem der Ansprüche 1 bis 8, **dadurch gekennzeichnet, dass** die Haltevorrichtung (1) eine Abspanneinrichtung (9) mit einem Abspannelement (15) und mit einem Abspannbodenanker (16) aufweist, wobei das Abspannelement (15) die Aufstelleinrichtung (2) Zugkraft übertragend mit dem Abspannbodenanker (16) verbindet.

10. Haltevorrichtung (1) nach Anspruch 9, **dadurch gekennzeichnet, dass** die Abspanneinrichtung (9) zwei die Aufstelleinrichtung (2) Zugkraft übertragend mit dem Abspannbodenanker (16) verbindende Abspannelemente (15) aufweist, wobei die Abspannelemente (15) vorzugsweise zwischen dem Abspannbodenanker (16) und der Aufstelleinrichtung (2) voneinander weg verlaufend angeordnet sind.

11. Haltevorrichtung (1) nach einem der Ansprüche 1 bis 10, **gekennzeichnet durch** eine Modulbefestigungsvorrichtung (40) zur Befestigung eines Photovoltaikmoduls (11) in einer Betriebsposition (P) am Tragseil (6) aufweist, wobei die Modulbefestigungsvorrichtung (40) vorzugsweise ein Basiselement (41), das zwei voneinander abgewandte Seiten und zwei sich zwischen diesen Seiten erstreckende und in einer Höhenrichtung (H) des Basiselementes (41) voneinander beabstandete Durchgangsöffnungen (42, 43) aufweist, und ein Befestigungselement (44), das an einer der Seiten angeordnet ist und einen vom Basiselement (41) weg vorspringenden Befestigungsvorsprung (45) aufweist, der dazu ausgestaltet ist, um an einem Photovoltaikmodul (11) befestigt zu werden.

12. Haltevorrichtung (1) nach einem der Ansprüche 1 bis 10, **gekennzeichnet durch** eine Stangenbefestigungsvorrichtung (20) zur unverschieblichen Befestigung an einer Stange, wobei die Stangenbefestigungsvorrichtung (20) bevorzugt zwei Befestigungsteile (21, 22) aufweist, die in einem aneinander montierten Zustand eine Stangendurchgangsöffnung (23) begrenzen, wobei eines der Befestigungsteile (22) eine sich von der Stangendurchgangsöffnung (23) weg erstreckende Befestigungsaufnahme (34) aufweist.

13. Modulbefestigungsvorrichtung (40), zur Befestigung eines Photovoltaikmoduls (11) in seiner Betriebsposition (P) an einer Trageeinrichtung einer Haltevorrichtung (1), insbesondere einer Haltevorrichtung (1) nach einem der vorstehenden Ansprüche, mit einem Basiselement (41), das zwei voneinander abgewandte Seiten und zwei sich zwischen diesen Seiten erstreckende und in einer Höhenrichtung (H) des Basiselementes (41) voneinander beabstandete Durchgangsöffnungen (42, 43) aufweist, und mit einem Befestigungselement (44), wobei das Befestigungselement (44) an einer der Seiten angeordnet ist und einen vom Basiselement (41) weg vorspringenden Befestigungsvorsprung (45) aufweist, der dazu ausgestaltet ist, um an einem Photovoltaikmodul (11) befestigt zu werden.

14. Modulbefestigungsvorrichtung (40) nach Anspruch 13, **dadurch gekennzeichnet, dass** das Befestigungselement (44) parallel zu der Seite, an der das Befestigungselement (44) angebracht ist, beabstandet von einer der Durchgangsöffnungen (43) angeordnet ist, und das Befestigungselement (44) eine Führungsöffnung (47) aufweist, die mit der anderen der Durchgangsöffnungen (42) eine durchgehende Öffnung (48) bildet.

15. Stangenbefestigungsvorrichtung (20), insbesondere zur Befestigung oder unverschieblichen Befestigung an einer Stange, bevorzugt einer Stange einer Haltevorrichtung (1) nach einem der vorstehenden Ansprüche 1 bis 11, mit zwei Befestigungsteilen (21, 22), die in einem aneinander montierten Zustand eine Stangendurchgangsöffnung (23) begrenzen, wobei eines der Befestigungsteile (22) eine sich von der Stangendurchgangsöffnung (23) weg erstreckende Befestigungsaufnahme (34) aufweist.

16. Stangenbefestigungsvorrichtung (20) nach Anspruch 15, **dadurch gekennzeichnet, dass** die Stangenbefestigungsvorrichtung (20) ein Befestigungsmittel (33) mit einer zumindest abschnittsweise von den beiden Befestigungsteilen (21, 22) beabstandet angeordnete Befestigungsachse (36), und mit einem Befestigungsstift (35), der die Befestigungsachse (36) mit einem der beiden Befestigungsteile (22) verbindet und der sich durch die Befestigungsaufnahme (34) erstreckt, aufweist.

17. Photovoltaikanlage (L), insbesondere Freiland-Photovoltaikanlage, mit mindestens einem Photovoltaikmodul und mit mindestens einer Haltevorrichtung (1) nach einem der Ansprüche 1 bis 11 und/oder mit wenigstens einer Modulbefestigungsvorrichtung (40) nach Anspruch 12 oder 13 und/oder mit wenigstens einer Stangenbefestigungsvorrichtung (20) nach Anspruch 14 oder 15.
